# EUROPEAN PATENT APPLICATION

(11) **EP 4 738 719 A1**
(43) Date of publication of application: **06.05.2026**
(21) Application number: 24832484.0
(22) Date of filing: 28.06.2024
(51) Int. Cl.: H04B 7/06, H04W 72/02, H04W 72/044, H04W 72/25, H04W 72/30, H04W 72/50, H04W 72/541, H04W 72/542, H04W 24/08, H04W 28/26

(54) **METHOD AND DEVICE FOR PERFORMING COMMUNICATION ON BASIS OF BEAM**

(30) Priority: 28.06.2023 KR 20230083512; 19.07.2023 KR 20230093945
(71) Applicant: LG Electronics Inc., Yeongdeungpo-gu Seoul 07336 (KR)
(72) Inventor: PARK, Hanjun, Seoul 06772 (KR); LEE, Seungmin, Seoul 06772 (KR); HWANG, Daesung, Seoul 06772 (KR)
(74) Representative: Plasseraud IP
(86) International application number: PCT/KR2024/009051
(87) International publication number: WO 2025/005707

(57) **Abstract**

A method for performing wireless communication by a first device, and a device supporting same are provided. The first device may obtain information on a first resource set related to a first type beam; obtain information on a second resource set related to a second type beam; and transmit, to a second device, a control signal for reserving at least one resource in the second resource set on the basis of the first resource set.

## Description

### TECHNICAL FIELD

This disclosure relates to a wireless communication system.

### BACKGROUND ART

5G NR is a successor technology to long term evolution (LTE) and is a new clean-slate mobile communication system with characteristics such as high performance, low latency, high availability, etc. 5G NR may utilize all available spectrum resources, including low-frequency bands below 1 GHz, mid-frequency bands between 1 GHz and 10 GHz, high-frequency (millimeter wave) bands above 24 GHz, etc.

A 6G (wireless communication) system has purposes such as (i) very high data rate per device, (ii) a very large number of connected devices, (iii) global connectivity, (iv) very low latency, (v) decrease in energy consumption of battery-free IoT devices, (vi) ultra-reliable connectivity, (vii) connected intelligence with machine learning capacity, etc. The vision of the 6G system may include four aspects such as intelligent connectivity, deep connectivity, holographic connectivity and ubiquitous connectivity, and the 6G system may satisfy the requirements shown in Table 1 below. That is, Table 1 shows the requirements of the 6G system.

**[Table 1]**

| | |
|---|---|
| Per device peak data rate | 1 Tbps |
| E2E latency | 1 ms |
| Maximum spectral efficiency | 100bps/Hz |
| Mobility support | Up to 1000km/hr |
| Satellite integration | Fully |
| AI | Fully |
| Autonomous vehicle | Fully |
| XR | Fully |
| Haptic Communication | Fully |

### DISCLOSURE

### TECHNICAL SOLUTION

Based on an embodiment of the present disclosure, a method for performing wireless communication by a first device may be provided. For example, the method may comprise: obtaining information regarding a first resource set related to a first type beam; obtaining information regarding a second resource set related to a second type beam; and transmitting, to a second device, a control signal for reserving at least one resource within the second resource set based on the first resource set. For example, the first type beam may include a non-directional beam, and the second type beam may include a directional beam.

Based on an embodiment of the present disclosure, a first device adapted to perform wireless communication may be provided. For example, the first device may comprise: at least one transceiver; at least one processor; and at least one memory connected to the at least one processor and storing instructions. For example, the instructions, based on being executed by the at least one processor, may cause the first device to perform operations comprising: obtaining information regarding a first resource set related to a first type beam; obtaining information regarding a second resource set related to a second type beam; and transmitting, to a second device, a control signal for reserving at least one resource within the second resource set based on the first resource set. For example, the first type beam may include a non-directional beam, and the second type beam may include a directional beam.

Based on an embodiment of the present disclosure, a processing device adapted to control a first device may be provided. For example, the processing device may comprise: at least one processor; and at least one memory connected to the at least one processor and storing instructions. For example, the instructions, based on being executed by the at least one processor, may cause the first device to perform operations comprising: obtaining information regarding a first resource set related to a first type beam; obtaining information regarding a second resource set related to a second type beam; and transmitting, to a second device, a control signal for reserving at least one resource within the second resource set based on the first resource set. For example, the first type beam may include a non-directional beam, and the second type beam may include a directional beam.

Based on an embodiment of the present disclosure, a non-transitory computer-readable storage medium storing instructions may be provided. For example, the instructions, when executed, may cause a first device to perform operations comprising: obtaining information regarding a first resource set related to a first type beam; obtaining information regarding a second resource set related to a second type beam; and transmitting, to a second device, a control signal for reserving at least one resource within the second resource set based on the first resource set. For example, the first type beam may include a non-directional beam, and the second type beam may include a directional beam.

### BRIEF DESCRIPTION OF THE DRAWINGS

FIG. 1 shows a communication structure providable in a 6G system, based on an embodiment of the present disclosure.
FIG. 2 shows an electromagnetic spectrum, based on an embodiment of the present disclosure.
FIG. 3 shows an example of an NTN typical scenario based on a transparent payload, based on an embodiment of the present disclosure.
FIG. 4 shows an example of an NTN typical scenario based on a regenerative payload, based on an embodiment of the present disclosure.
FIG. 5 shows an example of a sensing operation, based on an embodiment of the present disclosure.
FIG. 6 shows a structure of a slot of a frame, based on an embodiment of the present disclosure.
FIG. 7 shows an example of a BWP, based on an embodiment of the present disclosure.
FIG. 8 shows a procedure of performing V2X or SL communication by a UE based on a resource allocation mode, based on an embodiment of the present disclosure.
FIG. 9 shows a resource unit for CBR measurement, based on an embodiment of the present disclosure.
FIG. 10 shows beam management based on an embodiment of the present disclosure.
FIG. 11 shows a first resource set to which a first type beam is applied and a second resource set to which a second type beam is applied, based on an embodiment of the present disclosure.
FIG. 12 shows beam measurement and/or beam reporting based on a first resource set and/or a second resource set, based on an embodiment of the present disclosure.
FIG. 13 shows sensing based on a first resource set, based on an embodiment of the present disclosure.
FIG. 14 shows a method in which a UE reserves a resource in a second resource set by transmitting a control signal in a first resource set, based on an embodiment of the present disclosure.
FIG. 15 shows a method for a first device to perform wireless communication, based on an embodiment of the present disclosure.
FIG. 16 shows a method for a second device to perform wireless communication, based on an embodiment of the present disclosure.
FIG. 17 shows a communication system 1, based on an embodiment of the present disclosure.
FIG. 18 shows wireless devices, based on an embodiment of the present disclosure.
FIG. 19 shows a signal process circuit for a transmission signal, based on an embodiment of the present disclosure.
FIG. 20 shows another example of a wireless device, based on an embodiment of the present disclosure.
FIG. 21 shows a hand-held device, based on an embodiment of the present disclosure.
FIG. 22 shows a vehicle or an autonomous vehicle, based on an embodiment of the present disclosure.

### MODE FOR INVENTION

In the present disclosure, "A or B" may mean "only A", "only B" or "both A and B". In other words, in the present disclosure, "A or B" may be interpreted as "A and/or B". For example, in the present disclosure, "A, B or C" may mean "only A", "only B", "only C", or "any combination of A, B and C".

A slash (/) or comma used in the present disclosure may mean "and/or". For example, "A/B" may mean "A and/or B". Accordingly, "A/B" may mean "only A", "only B", or "both A and B". For example, "A, B, C" may mean "A, B or C".

In the present disclosure, "at least one of A and B" may mean "only A", "only B", or "both A and B". In addition, in the present disclosure, the expression "at least one of A or B" or "at least one of A and/or B" may be interpreted as "at least one of A and B".

In addition, in the present disclosure, "at least one of A, B and C" may mean "only A", "only B", "only C", or "any combination of A, B and C". In addition, "at least one of A, B or C" or "at least one of A, B and/or C" may mean "at least one of A, B and C".

In addition, a parenthesis used in the present disclosure may mean "for example". Specifically, when indicated as "control information (PDCCH)", it may mean that "PDCCH" is proposed as an example of the "control information". In other words, the "control information" of the present disclosure is not limited to "PDCCH", and "PDCCH" may be proposed as an example of the "control information". In addition, when indicated as "control information (i.e., PDCCH)", it may also mean that "PDCCH" is proposed as an example of the "control information".

In the following description, 'when, if, or in case of may be replaced with 'based on'.

A technical feature described individually in one figure in the present disclosure may be individually implemented, or may be simultaneously implemented.

In the present disclosure, a higher layer parameter may be a parameter which is configured, pre-configured or pre-defined for a UE. For example, a base station or a network may transmit the higher layer parameter to the UE. For example, the higher layer parameter may be transmitted through radio resource control (RRC) signaling or medium access control (MAC) signaling.

In the present disclosure, "configure/configured or define/defined" may be interpreted as being configured or pre-configured for a device through pre-defined signaling (e.g., SIB, MAC, RRC) from a base station or a network. In the present disclosure, "configure/configured or define/defined" may be interpreted as being pre-configured for a device.

The technology described below may be used in various wireless communication systems such as code division multiple access (CDMA), frequency division multiple access (FDMA), time division multiple access (TDMA), orthogonal frequency division multiple access (OFDMA), single carrier frequency division multiple access (SC-FDMA), and so on. The CDMA may be implemented with a radio technology, such as universal terrestrial radio access (UTRA) or CDMA2000. The TDMA may be implemented with a radio technology, such as global system for mobile communications (GSM)/general packet ratio service (GPRS)/enhanced data rate for GSM evolution (EDGE). The OFDMA may be implemented with a radio technology, such as institute of electrical and electronics engineers (IEEE) 802.11 (Wi-Fi), IEEE 802.16 (WiMAX), IEEE 802-20, evolved UTRA (E-UTRA), long term evolution (LTE), 5G NR, and so on.

The technology proposed in the present disclosure may be implemented as 6G wireless technology and may be applied to various 6G systems. For example, the 6G system may have key factors such as enhanced mobile broadband (eMBB), ultra-reliable low latency communications (URLLC), massive machine type communications (mMTC), artificial intelligence (AI) integrated communication, tactile internet, high throughput, high network capacity, high energy efficiency, low backhaul and access network congestion, and enhanced data security.

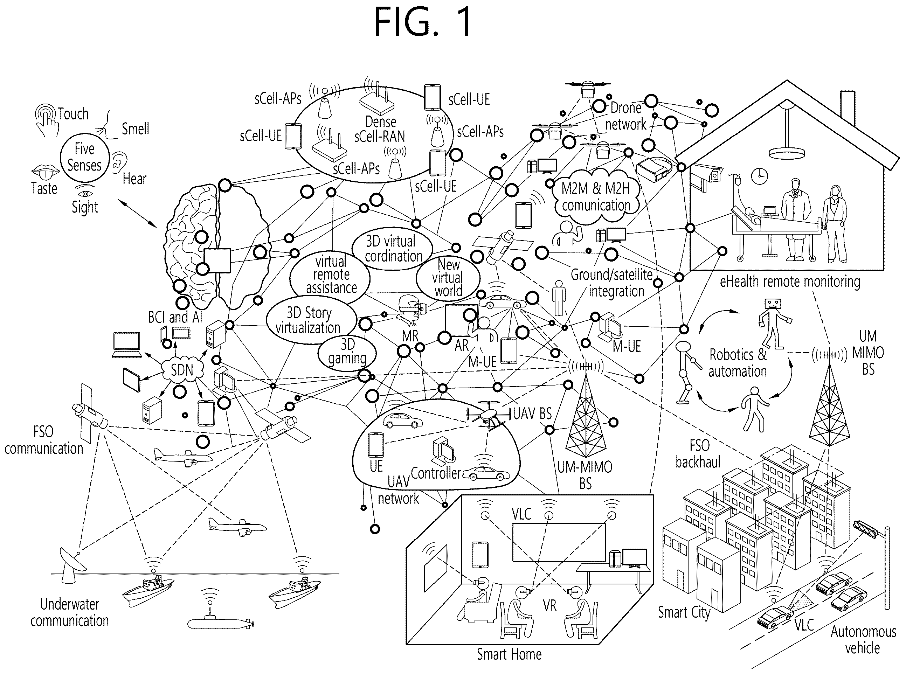

FIG. 1 shows a communication structure providable in a 6G system, based on an embodiment of the present disclosure. The embodiment of FIG. 1 may be combined with various embodiments of the present disclosure.

In 6G, new network characteristics may be as follows.
- Satellites integrated network
- Connected intelligence: Unlike the wireless communication systems of previous generations, 6G is innovative and wireless evolution may be updated from "connected things" to "connected intelligence". AI may be applied in each step (or each signal processing procedure which will be described below) of a communication procedure.
- Seamless integration of wireless information and energy transfer
- Ubiquitous super 3-dimension connectivity: Access to networks and core network functions of drones and very low earth orbit satellites will establish super 3D connection in 6G ubiquitous.

In the new network characteristics of 6G, several general requirements may be as follows.
- Small cell networks
- Ultra-dense heterogeneous network
- High-capacity backhaul
- Radar technology integrated with mobile technology: High-precision localization (or location-based service) through communication is one of the functions of the 6G wireless communication system. Accordingly, the radar system will be integrated with the 6G network.
- Softwarization and virtualization

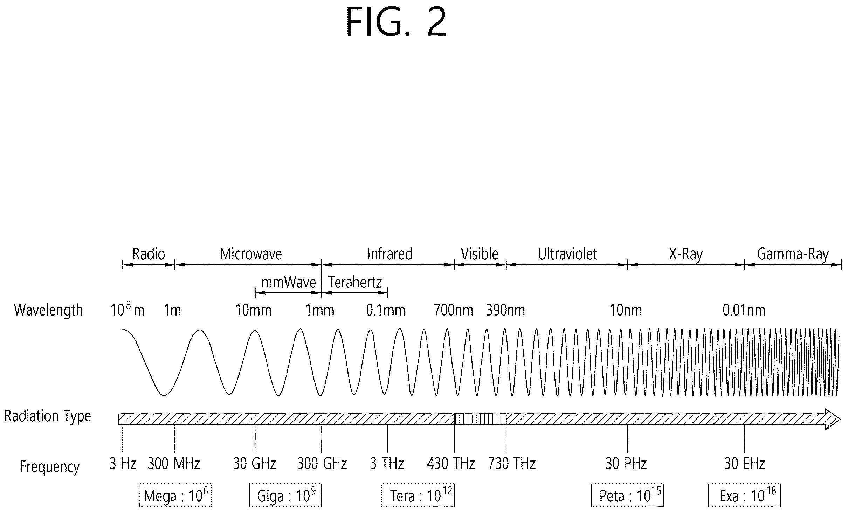

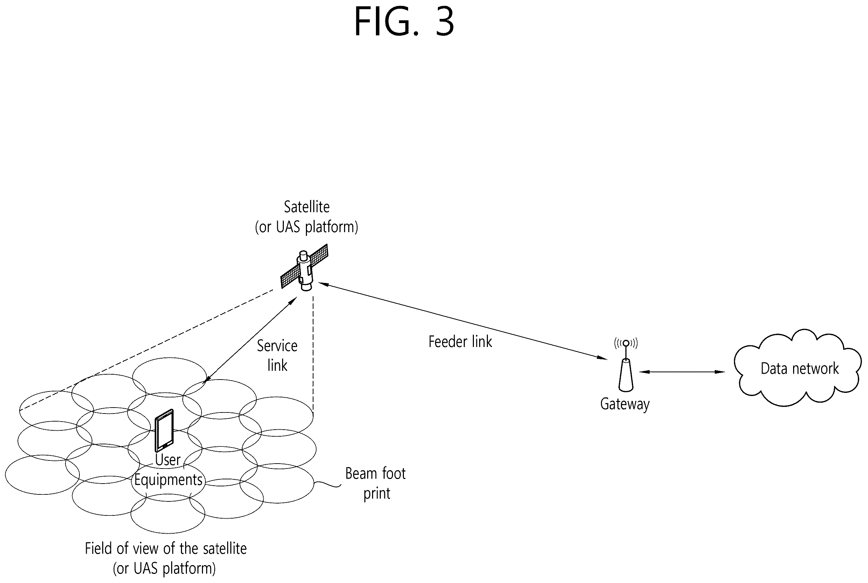

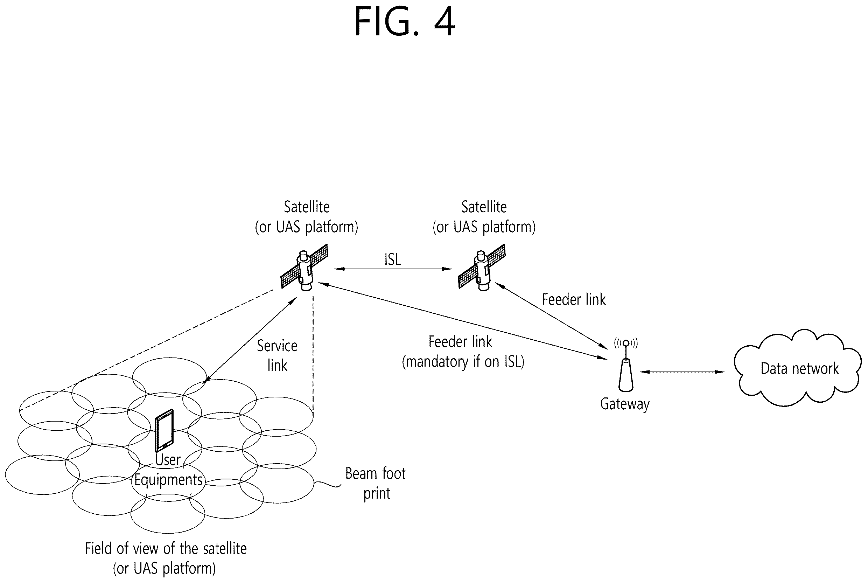

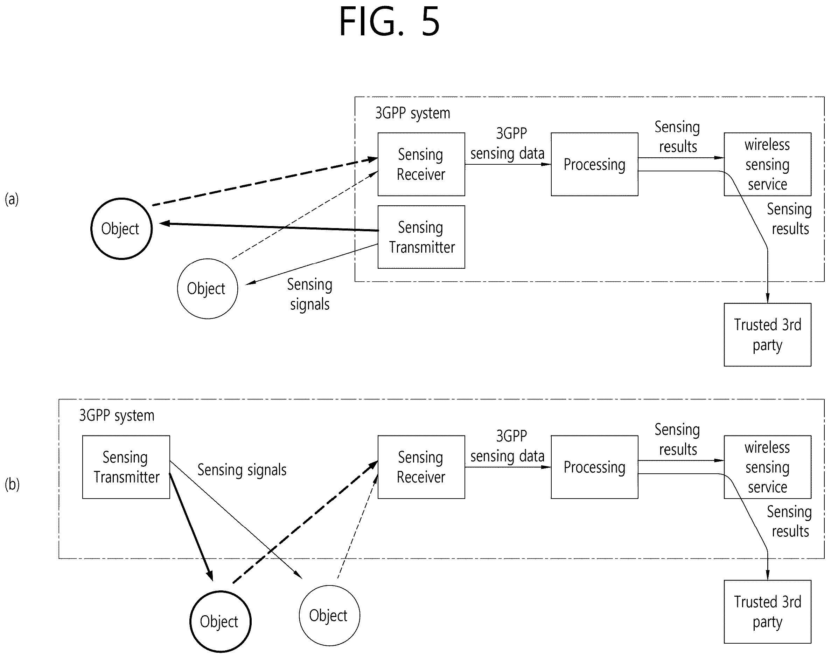

Core implementation technology of 6G system is described below.
- Artificial Intelligence (AI): When AI is introduced to communication, real-time data transmission may be simplified and improved. AI may determine a method of performing complicated target tasks using countless analysis. That is, AI may increase efficiency and reduce processing delay. Operation consuming time such as handover, network selection, and resource scheduling immediately performed by using AI. AI may also play an important role in M2M, machine-to-human, and human-to-machine. In addition, AI may be a prompt communication in brain computer interface (BCI). An AI based communication system may be supported by metamaterial, intelligence structure, intelligence network, intelligence device, intelligence cognitive radio, self-maintaining wireless network, and machine learning.
- Terahertz (THz) communication: A data rate may increase by increasing bandwidth. This may be performed by using sub-TH communication with wide bandwidth and applying advanced massive MIMO technology. THz waves which are known as sub-millimeter radiation, generally indicates a frequency band between 0.1 THz and 10 THz with a corresponding wavelength in a range of 0.03 mm to 3 mm. A band range of 100 GHz to 300 GHz (sub THz band) is regarded as a main part of the THz band for cellular communication. When the sub-THz band is added to the mmWave band, the 6G cellular communication capacity increases. 300 GHz to 3 THz of the defined THz band is in a far infrared (IR) frequency band. A band of 300 GHz to 3 THz is a part of an optical band but is at the border of the optical band and is just behind an RF band. Accordingly, the band of 300 GHz to 3 THz has similarity with RF. FIG. 2 shows an electromagnetic spectrum, based on an embodiment of the present disclosure. The embodiment of FIG. 2 may be combined with various embodiments of the present disclosure. The main characteristics of THz communication include (i) bandwidth widely available to support a very high data rate and (ii) high path loss occurring at a high frequency (a high directional antenna is indispensable). A narrow beam width generated in the high directional antenna reduces interference. The small wavelength of a THz signal allows a larger number of antenna elements to be integrated with a device and BS operating in this band. Therefore, an advanced adaptive arrangement technology capable of overcoming a range limitation may be used.
- Massive MIMO technology (large-scale MIMO)
- Hologram beamforming (HBF)
- Optical wireless technology
- Free space optical (FSO) backhaul network
- Quantum communication
- Cell-free communication
- Integration of wireless information and power transmission
- Integration of wireless communication and sensing
- Integrated access and backhaul network
- Big data analysis
- Reconfigurable intelligent surface
- Metaverse
- Block-chain
- Unmanned aerial vehicle (UAV): An UAV or a drone will be an important factor in 6G wireless communication. In most cases, a high-speed data wireless connection may be provided using UAV technology. A base station (BS) entity may be installed in the UAV to provide cellular connectivity. The UAV may have certain features, which are not found in fixed BS infrastructures, such as easy deployment, strong line-of-sight links, and mobility-controlled degrees of freedom. During emergencies such as natural disasters, the deployment of terrestrial telecommunications infrastructure is not economically feasible and sometimes services cannot be provided in volatile environments. The UAV can easily handle this situation. The UAV will be a new paradigm in the field of wireless communication. This technology facilitates the three basic requirements of wireless networks, such as eMBB, URLLC and mMTC. The UAV can also serve a number of purposes, such as network connectivity improvement, fire detection, disaster emergency services, security and surveillance, pollution monitoring, parking monitoring, and accident monitoring. Therefore, UAV technology is recognized as one of the most important technologies for 6G communication.
- Advanced air mobility (AAM): An AAM is a superordinate concept of urban air mobility (UAM), which is air transportation that can be used in an urban area, and may refer to a means of transportation that includes movement between the urban area and a regional hub.
- Autonomous driving (self-driving): Vehicle to everything (V2X) that is a core element for establishing an autonomous driving infrastructure may be a technology that vehicle communicates and shares with various elements in road for autonomous driving such as vehicle to vehicle (V2V), vehicle to infrastructure (V2I), and so on. To maximize a performance of autonomous driving and to secure high safety, high transmission speed and low latency technology have to be needed. Furthermore, in the future, autonomous driving may need to go beyond delivering warnings or guidance messages to drivers and actively intervene in vehicle operation and directly control the vehicle in dangerous situations. To this end, since the amount of information that needs to be transmitted and received may be enormous, autonomous driving is expected to be maximized in 6G being higher transmission speed and lower latency than 5G.
- Non-terrestrial networks (NTN): An NTN may refer to a network or a network segment that utilizes radio frequency (RF) resources aboard a satellite (or an unmanned aerial system (UAS) platform). FIG. 3 shows an example of an NTN typical scenario based on a transparent payload, based on an embodiment of the present disclosure. FIG. 4 shows an example of an NTN typical scenario based on a regenerative payload, based on an embodiment of the present disclosure. The embodiment of FIG. 3 or FIG. 4 may be combined with various embodiments of the present disclosure. Referring to FIG. 3, a satellite (or an UAS platform) may establish a service link with a UE. The satellite (or the UAS platform) may be connected with a gateway through a feeder link. The satellite may be connected with a data network through the gateway. A beam footprint may refer to an area where signals transmitted by the satellite can be received. Referring to FIG. 4, a satellite (or an UAS platform) may establish a service link with a UE. The satellite (or the UAS platform) connected with the UE may be connected with another satellite (or another UAS platform) through an inter-satellite link (ISL). Another satellite (or another UAS platform) may be connected with a gateway through a feeder link. Based on the regenerative payload, the satellite may be connected with a data network through the gateway and another satellite. If the ISL does not exist between the satellite and another satellite, a feeder link between the satellite and the gateway may be required. FIGs. 3 and 4 are only examples of NTN scenarios, and the NTN can be implemented based on various types of scenarios. For example, the satellite (or the UAS platform) may implement a transparent or regenerative (with on board processing) payload. For example, the satellite (or the UAS platform) may generate multiple beams over a specified service area based on the field of view of the satellite (or the UAS platform). For example, the field of view of the satellite (or the UAS platform) may vary depending on an on-board antenna diagram and a minimum elevation angle. For example, the transparent payload may include radio frequency filtering, frequency conversion, and amplification. Therefore, the waveform signal repeated by the payload may not be changed. For example, the regenerative payload may include radio frequency filtering, frequency conversion and amplification, demodulation/decryption, switching and/or routing, and coding/modulation. For example, the regenerative payload may be substantially equivalent to equipping the satellite (or the UAS platform) with all or part of the base station functionality.
- Integrated sensing and communication (ISAC): Wireless sensing is a technology enabler to acquire information about characteristics of the environment and/or objects within the environment, that uses radio frequency to determine the distance (range), angle, or instantaneous linear velocity of objects, etc. Radio frequency sensing functionality can provide services for device-free object localization as there is lack of need for the object to be connected via a device in the network. The capabilities to obtain range, velocity, and angle information from the radio frequency signals can provide a broad range of new functionality, such as various objects detection, object recognition (e.g., vehicle, human, animal, UAV) and high accuracy localization, tracking and activity recognition. For example, the wireless sensing service may provide input to different verticals (e.g., unmanned aerial vehicle, smart home, V2X, factories, railways, public safety, etc.) enabling applications offering e.g., intruder detection, assisted automotive maneuvering and navigation, trajectory tracing, collision avoidance, traffic management, health and activity monitoring. In some cases, wireless sensing can also use non-3GPP type sensors (e.g., radar, camera) to further support the 3GPP-based sensing. For example, the operation of the wireless sensing service, i.e., sensing operation, may rely on processing the transmissions, reflections, and scattering of wireless sensing signals. Wireless sensing, therefore, may have the opportunity to enhance the legacy system from a communication network to a wireless communication and sensing network. FIG. 5 shows an example of a sensing operation, based on an embodiment of the present disclosure. The embodiment of FIG. 5 may be combined with various embodiments of the present disclosure. Specifically, (a) of FIG. 5 shows an example of sensing (e.g., monostatic sensing) with co-located sensing receiver and sensing transmitter, and (b) of FIG. 5 shows an example of sensing (e.g., bistatic sensing) with separated sensing receiver and sensing transmitter.

Layers of a radio interface protocol between the UE and the network may be classified into a first layer (layer 1, L1), a second layer (layer 2, L2), and a third layer (layer 3, L3) based on the lower three layers of the open system interconnection (OSI) model that is well-known in the communication system. Among them, a physical (PHY) layer belonging to the first layer provides an information transfer service by using a physical channel, and a radio resource control (RRC) layer belonging to the third layer serves to control a radio resource between the UE and the network. For this, the RRC layer exchanges an RRC message between the UE and the BS.

The physical layer provides an upper layer with an information transfer service through a physical channel. The physical layer is connected to a medium access control (MAC) layer which is an upper layer of the physical layer through a transport channel. Data is transferred between the MAC layer and the physical layer through the transport channel. The transport channel is classified according to how and with what characteristics data is transmitted through a radio interface.

Between different physical layers, i.e., a physical layer of a transmitter and a physical layer of a receiver, data are transferred through the physical channel. The physical channel is modulated using an orthogonal frequency division multiplexing (OFDM) scheme, and utilizes time and frequency as a radio resource.

The MAC layer provides services to a radio link control (RLC) layer, which is a higher layer of the MAC layer, via a logical channel. The MAC layer provides a function of mapping multiple logical channels to multiple transport channels. The MAC layer also provides a function of logical channel multiplexing by mapping multiple logical channels to a single transport channel. The MAC layer provides data transfer services over logical channels.

The RLC layer performs concatenation, segmentation, and reassembly of Radio Link Control Service Data Unit (RLC SDU). In order to ensure diverse quality of service (QoS) required by a radio bearer (RB), the RLC layer provides three types of operation modes, i.e., a transparent mode (TM), an unacknowledged mode (UM), and an acknowledged mode (AM). An AM RLC provides error correction through an automatic repeat request (ARQ).

A radio resource control (RRC) layer is defined only in the control plane. The RRC layer serves to control the logical channel, the transport channel, and the physical channel in association with configuration, reconfiguration and release of RBs. The RB is a logical path provided by the first layer (i.e., the physical layer or the PHY layer) and the second layer (i.e., a MAC layer, an RLC layer, a packet data convergence protocol (PDCP) layer, and a service data adaptation protocol (SDAP) layer) for data delivery between the UE and the network.

Functions of a packet data convergence protocol (PDCP) layer in the user plane include user data delivery, header compression, and ciphering. Functions of a PDCP layer in the control plane include control-plane data delivery and ciphering/integrity protection.

A service data adaptation protocol (SDAP) layer is defined only in a user plane. The SDAP layer performs mapping between a Quality of Service (QoS) flow and a data radio bearer (DRB) and QoS flow ID (QFI) marking in both DL and UL packets.

The configuration of the RB implies a process for specifying a radio protocol layer and channel properties to provide a particular service and for determining respective detailed parameters and operations. The RB can be classified into two types, i.e., a signaling RB (SRB) and a data RB (DRB). The SRB is used as a path for transmitting an RRC message in the control plane. The DRB is used as a path for transmitting user data in the user plane.

When an RRC connection is established between an RRC layer of the UE and an RRC layer of the E-UTRAN, the UE is in an RRC_CONNECTED state, and, otherwise, the UE may be in an RRC_IDLE state. In case of the NR, an RRC_INACTIVE state is additionally defined, and a UE being in the RRC_INACTIVE state may maintain its connection with a core network whereas its connection with the BS is released.

Data is transmitted from the network to the UE through a downlink transport channel. Examples of the downlink transport channel include a broadcast channel (BCH) for transmitting system information and a downlink-shared channel (SCH) for transmitting user traffic or control messages. Traffic of downlink multicast or broadcast services or the control messages can be transmitted on the downlink-SCH or an additional downlink multicast channel (MCH). Data is transmitted from the UE to the network through an uplink transport channel. Examples of the uplink transport channel include a random access channel (RACH) for transmitting an initial control message and an uplink SCH for transmitting user traffic or control messages.

Examples of logical channels belonging to a higher channel of the transport channel and mapped onto the transport channels include a broadcast channel (BCCH), a paging control channel (PCCH), a common control channel (CCCH), a multicast control channel (MCCH), a multicast traffic channel (MTCH), etc.

A radio frame may be used for performing uplink and downlink transmission. A radio frame has a length of 10ms and may be defined to be configured of two half-frames (HFs). A half-frame may include five 1ms subframes (SFs). A subframe (SF) may be divided into one or more slots, and the number of slots within a subframe may be determined based on subcarrier spacing (SCS). Each slot may include 12 or 14 OFDM(A) symbols according to a cyclic prefix (CP).

In case of using a normal CP, each slot may include 14 symbols. In case of using an extended CP, each slot may include 12 symbols. Herein, a symbol may include an OFDM symbol (or CP-OFDM symbol) and a Single Carrier-FDMA (SC-FDMA) symbol (or Discrete Fourier Transform-spread-OFDM (DFT-s-OFDM) symbol).

Table 2 shown below represents an example of a number of symbols per slot (N^{slot}_{symb}), a number slots per frame (N^{frame,u}ₛₗₒₜ), and a number of slots per subframe (N^{subframe,u}ₛₗₒₜ) based on an SCS configuration (u), in a case where a normal CP or an extended CP is used.

**[Table 2]**

| CP type | SCS (15*2^{u}) | N^{slot} _{symb} | N^{frame,u}ₛₗₒₜ | N^{subframe,u}ₛₗₒₜ |
|---|---|---|---|---|
| | 15kHz (u=0) | 14 | 10 | 1 |
| normal CP | 30kHz (u=1) | 14 | 20 | 2 |
| | 60kHz (u=2) | 14 | 40 | 4 |
| | 120kHz (u=3) | 14 | 80 | 8 |
| | 240kHz (u=4) | 14 | 160 | 16 |
| extended CP | 60kHz (u=2) | 12 | 40 | 4 |

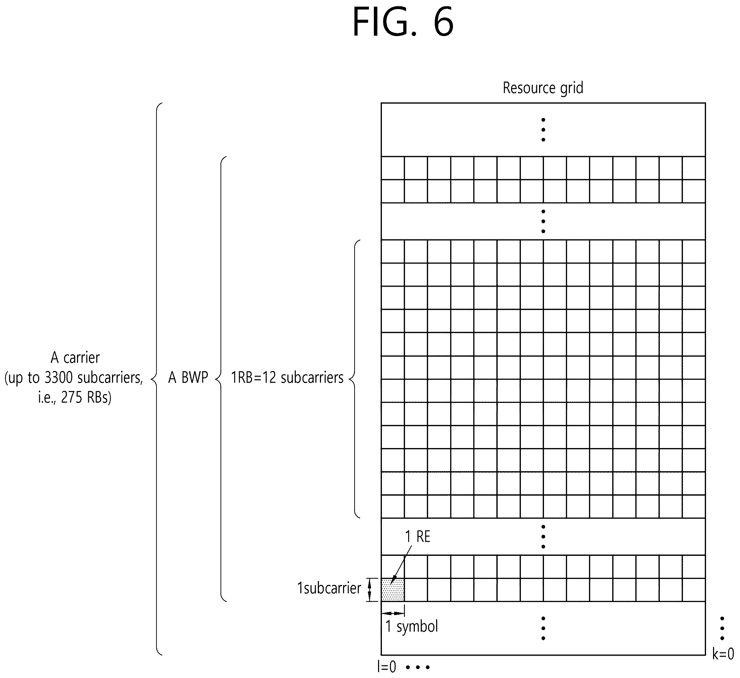

FIG. 6 shows a structure of a slot of a frame, based on an embodiment of the present disclosure. The embodiment of FIG. 6 may be combined with various embodiments of the present disclosure.

Referring to FIG. 6, a slot includes a plurality of symbols in a time domain. A carrier includes a plurality of subcarriers in a frequency domain. A Resource Block (RB) may be defined as a plurality of consecutive subcarriers (e.g., 12 subcarriers) in the frequency domain. A Bandwidth Part (BWP) may be defined as a plurality of consecutive (Physical) Resource Blocks ((P)RBs) in the frequency domain, and the BWP may correspond to one numerology (e.g., SCS, CP length, and so on). A carrier may include a maximum of N number BWPs (e.g., 5 BWPs). Data communication may be performed via an activated BWP. Each element may be referred to as a Resource Element (RE) within a resource grid and one complex symbol may be mapped to each element.

A bandwidth part (BWP) may be a set of consecutive physical resource blocks (PRBs) in a given numerology. The PRB may be selected from consecutive sub-sets of common resource blocks (CRBs) for the given numerology on a given carrier

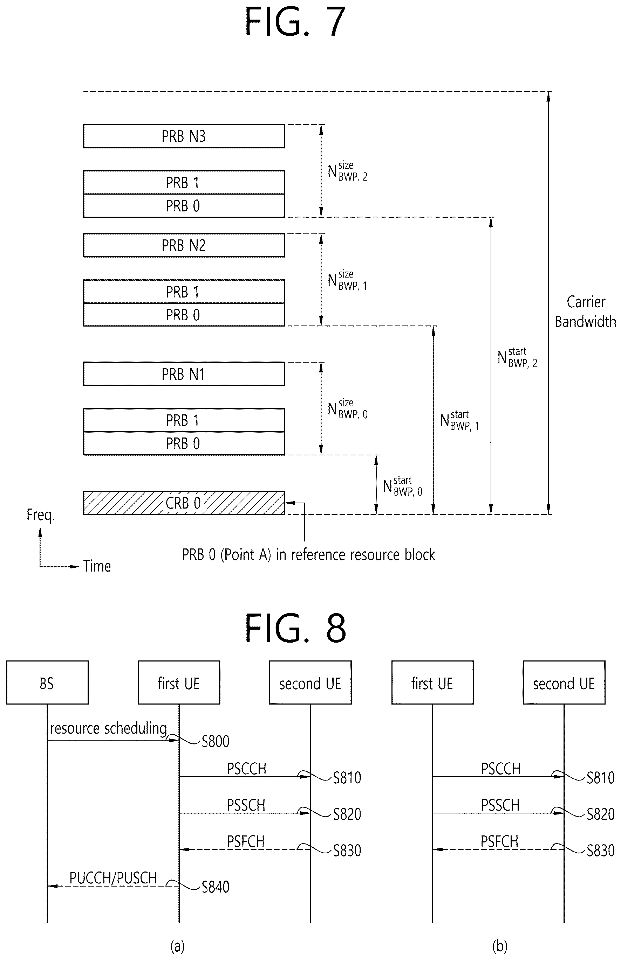

FIG. 7 shows an example of a BWP, based on an embodiment of the present disclosure. The embodiment of FIG. 7 may be combined with various embodiments of the present disclosure. It is assumed in the embodiment of FIG. 7 that the number of BWPs is 3.

Referring to FIG. 7, a common resource block (CRB) may be a carrier resource block numbered from one end of a carrier band to the other end thereof. In addition, the PRB may be a resource block numbered within each BWP. A point A may indicate a common reference point for a resource block grid.

The BWP may be configured by a point A, an offset N^{start}_{BWP} from the point A, and a bandwidth N^{size}_{BWP}. For example, the point A may be an external reference point of a PRB of a carrier in which a subcarrier 0 of all numerologies (e.g., all numerologies supported by a network on that carrier) is aligned. For example, the offset may be a PRB interval between a lowest subcarrier and the point A in a given numerology. For example, the bandwidth may be the number of PRBs in the given numerology.

A sidelink synchronization signal (SLSS) may include a primary sidelink synchronization signal (PSSS) and a secondary sidelink synchronization signal (SSSS), as a sidelink (SL)-specific sequence. The PSSS may be referred to as a sidelink primary synchronization signal (S-PSS), and the SSSS may be referred to as a sidelink secondary synchronization signal (S-SSS). For example, length-127 M-sequences may be used for the S-PSS, and length-127 gold sequences may be used for the S-SSS. For example, a UE may use the S-PSS for initial signal detection and for synchronization acquisition. For example, the UE may use the S-PSS and the S-SSS for acquisition of detailed synchronization and for detection of a synchronization signal ID.

A physical sidelink broadcast channel (PSBCH) may be a (broadcast) channel for transmitting default (system) information which must be first known by the UE before SL signal transmission/reception. For example, the default information may be information related to SLSS, a duplex mode (DM), a time division duplex (TDD) uplink/downlink (UL/DL) configuration, information related to a resource pool, a type of an application related to the SLSS, a subframe offset, broadcast information, or the like. For example, for evaluation of PSBCH performance, in NR V2X, a payload size of the PSBCH may be 56 bits including 24-bit cyclic redundancy check (CRC).

The S-PSS, the S-SSS, and the PSBCH may be included in a block format (e.g., SL synchronization signal (SS)/PSBCH block, hereinafter, sidelink-synchronization signal block (S-SSB)) supporting periodical transmission. The S-SSB may have the same numerology (i.e., SCS and CP length) as a physical sidelink control channel (PSCCH)/physical sidelink shared channel (PSSCH) in a carrier, and a transmission bandwidth may exist within a (pre-)configured sidelink (SL) BWP. For example, the S-SSB may have a bandwidth of 11 resource blocks (RBs). For example, the PSBCH may exist across 11 RBs. In addition, a frequency position of the S-SSB may be (pre-)configured. Accordingly, the UE does not have to perform hypothesis detection at frequency to discover the S-SSB in the carrier.

In the present disclosure, a PSCCH may be replaced with a control channel, a physical control channel, a control channel related to sidelink, a physical control channel related to sidelink, etc. In the present disclosure, a PSSCH may be replaced with a shared channel, a physical shared channel, a shared channel related to sidelink, a physical shared channel related to sidelink, etc.

FIG. 8 shows a procedure of performing V2X or SL communication by a UE based on a resource allocation mode, based on an embodiment of the present disclosure. The embodiment of FIG. 8 may be combined with various embodiments of the present disclosure.

Referring to (a) of FIG. 8, in a resource allocation mode 1, a base station may schedule SL resource(s) to be used by a UE for SL transmission. For example, in step S800, a base station may transmit information related to SL resource(s) and/or information related to UL resource(s) to a first UE. For example, the UL resource(s) may include PUCCH resource(s) and/or PUSCH resource(s). For example, the UL resource(s) may be resource(s) for reporting SL HARQ feedback to the base station.

For example, the first UE may receive information related to dynamic grant (DG) resource(s) and/or information related to configured grant (CG) resource(s) from the base station. For example, the CG resource(s) may include CG type 1 resource(s) or CG type 2 resource(s). In the present disclosure, the DG resource(s) may be resource(s) configured/allocated by the base station to the first UE through a downlink control information (DCI). In the present disclosure, the CG resource(s) may be (periodic) resource(s) configured/allocated by the base station to the first UE through a DCI and/or an RRC message. For example, in the case of the CG type 1 resource(s), the base station may transmit an RRC message including information related to CG resource(s) to the first UE. For example, in the case of the CG type 2 resource(s), the base station may transmit an RRC message including information related to CG resource(s) to the first UE, and the base station may transmit a DCI related to activation or release of the CG resource(s) to the first UE.

In step S810, the first UE may transmit a PSCCH (e.g., sidelink control information (SCI) or 1^{st}-stage SCI) to a second UE based on the resource scheduling. In step S820, the first UE may transmit a PSSCH (e.g., 2^{nd}-stage SCI, MAC PDU, data, etc.) related to the PSCCH to the second UE. In step S830, the first UE may receive a PSFCH related to the PSCCH/PSSCH from the second UE. For example, HARQ feedback information (e.g., NACK information or ACK information) may be received from the second UE through the PSFCH. In step S840, the first UE may transmit/report HARQ feedback information to the base station through the PUCCH or the PUSCH. For example, the HARQ feedback information reported to the base station may be information generated by the first UE based on the HARQ feedback information received from the second UE. For example, the HARQ feedback information reported to the base station may be information generated by the first UE based on a pre-configured rule. For example, the DCI may be a DCI for SL scheduling. For example, a format of the DCI may be a DCI format 3_0 or a DCI format 3 1.

Hereinafter, an example of DCI format 3_0 will be described.

DCI format 3_0 is used for scheduling of NR PSCCH and NR PSSCH in one cell.

The following information is transmitted by means of the DCI format 3_0 with CRC scrambled by SL-RNTI or SL-CS-RNTI:
- Resource pool index - ceiling (log₂I) bits, where I is the number of resource pools for transmission configured by the higher layer parameter sl-TxPoolScheduling.
- Time gap - 3 bits determined by higher layer parameter sl-DCI-ToSL-Trans
- HARQ process number - 4 bits
- New data indicator - 1 bit
- Lowest index of the subchannel allocation to the initial transmission - ceiling (log₂(N^{SL}_{subChannel})) bits
- SCI format 1-A fields: frequency resource assignment, time resource assignment
- PSFCH-to-HARQ feedback timing indicator - ceiling (log₂ N_{fb_timing}) bits, where N_{fb_timing} is the number of entries in the higher layer parameter sl-PSFCH-ToPUCCH.
- PUCCH resource indicator - 3 bits
- Configuration index - 0 bit if the UE is not configured to monitor DCI format 3_0 with CRC scrambled by SL-CS-RNTI; otherwise 3 bits. If the UE is configured to monitor DCI format 3_0 with CRC scrambled by SL-CS-RNTI, this field is reserved for DCI format 3_0 with CRC scrambled by SL-RNTI.
- Counter sidelink assignment index - 2 bits, 2 bits if the UE is configured with pdsch-HARQ-ACK-Codebook = dynamic, 2 bits if the UE is configured with pdsch-HARQ-ACK-Codebook = semi-static
- Padding bits, if required

Referring to (b) of FIG. 8, in a resource allocation mode 2, a UE may determine SL transmission resource(s) within SL resource(s) configured by a base station/network or pre-configured SL resource(s). For example, the configured SL resource(s) or the pre-configured SL resource(s) may be a resource pool. For example, the UE may autonomously select or schedule resource(s) for SL transmission. For example, the UE may perform SL communication by autonomously selecting resource(s) within the configured resource pool. For example, the UE may autonomously select resource(s) within a selection window by performing a sensing procedure and a resource (re)selection procedure. For example, the sensing may be performed in a unit of subchannel(s). For example, in step S810, a first UE which has selected resource(s) from a resource pool by itself may transmit a PSCCH (e.g., sidelink control information (SCI) or 1^{st}-stage SCI) to a second UE by using the resource(s). In step S820, the first UE may transmit a PSSCH (e.g., 2^{nd}-stage SCI, MAC PDU, data, etc.) related to the PSCCH to the second UE. In step S830, the first UE may receive a PSFCH related to the PSCCH/PSSCH from the second UE.

Referring to (a) or (b) of FIG. 8, for example, the first UE may transmit a SCI to the second UE through the PSCCH. Alternatively, for example, the first UE may transmit two consecutive SCIs (e.g., 2-stage SCI) to the second UE through the PSCCH and/or the PSSCH. In this case, the second UE may decode two consecutive SCIs (e.g., 2-stage SCI) to receive the PSSCH from the first UE. In the present disclosure, a SCI transmitted through a PSCCH may be referred to as a 1^{st} SCI, a first SCI, a 1^{st}-stage SCI or a 1^{st}-stage SCI format, and a SCI transmitted through a PSSCH may be referred to as a 2^{nd} SCI, a second SCI, a 2^{nd}-stage SCI or a 2^{nd}-stage SCI format.

For example, the 1^{st}-stage SCI format may include a SCI format 1-A and/or a SCI format 1-B, and the 2^{nd}-stage SCI format may include a SCI format 2-A, a SCI format 2-B, a SCI format 2-C and/or a SCI format 2-D.

Hereinafter, an example of SCI format 1-A will be described.

SCI format 1-A is used for the scheduling of PSSCH and 2nd-stage-SCI on PSSCH.

The following information is transmitted by means of the SCI format 1-A:
- Priority - 3 bits
- Frequency resource assignment - ceiling (log₂(N^{SL}_{subChannel}(N^{SL}_{subChannel}+1)/2)) bits when the value of the higher layer parameter sl-MaxNumPerReserve is configured to 2; otherwise ceiling log₂(N^{SL}_{subChannel}(N^{SL}_{subChannel}+1)(2N^{SL}_{subChannel}+1)/6) bits when the value of the higher layer parameter sl-MaxNumPerReserve is configured to 3
- Time resource assignment - 5 bits when the value of the higher layer parameter sl-MaxNumPerReserve is configured to 2; otherwise 9 bits when the value of the higher layer parameter sl-MaxNumPerReserve is configured to 3
- Resource reservation period - ceiling (log₂ N_{rsv_period}) bits, where N_{rsv_period} is the number of entries in the higher layer parameter sl-ResourceReservePeriodList, if higher layer parameter sl-MultiReserveResource is configured; 0 bit otherwise
- DMRS pattern - ceiling (log₂ Nₚₐₜₜₑᵣₙ) bits, where Nₚₐₜₜₑᵣₙ is the number of DMRS patterns configured by higher layer parameter sl-PSSCH-DMRS-TimePatternList
- 2^{nd}-stage SCI format - 2 bits
- Beta_offset indicator - 2 bits as provided by higher layer parameter sl-BetaOffsets2ndSCI
- Number of DMRS port - 1 bit
- Modulation and coding scheme - 5 bits
- Additional MCS table indicator - 1 bit if one MCS table is configured by higher layer parameter sl-Additional-MCS-Table; 2 bits if two MCS tables are configured by higher layer parameter sl- Additional-MCS-Table; 0 bit otherwise
- PSFCH overhead indication - 1 bit if higher layer parameter sl-PSFCH-Period = 2 or 4; 0 bit otherwise
- Reserved - a number of bits as determined by higher layer parameter sl-NumReservedBits, with value set to zero.
- Hereinafter, an example of SCI format 2-A will be described.

SCI format 2-A is used for the decoding of PSSCH, with HARQ operation when HARQ-ACK information includes ACK or NACK, when HARQ-ACK information includes only NACK, or when there is no feedback of HARQ-ACK information.

The following information is transmitted by means of the SCI format 2-A:
- HARQ process number - 4 bits
- New data indicator - 1 bit
- Redundancy version - 2 bits
- Source ID - 8 bits
- Destination ID - 16 bits
- HARQ feedback enabled/disabled indicator - 1 bit
- Cast type indicator - 2 bits as defined in Table 3
- CSI request - 1 bit

**[Table 3]**

| Value of Cast type indicator | Cast type |
|---|---|
| 00 | Broadcast |
| 01 | Groupcast when HARQ-ACK information includes ACK or NACK |
| 10 | Unicast |
| 11 | Groupcast when HARQ-ACK information includes only NACK |

Hereinafter, an example of SCI format 2-B will be described.

SCI format 2-B is used for the decoding of PSSCH, with HARQ operation when HARQ-ACK information includes only NACK, or when there is no feedback of HARQ-ACK information.

The following information is transmitted by means of the SCI format 2-B:
- HARQ process number - 4 bits
- New data indicator - 1 bit
- Redundancy version - 2 bits
- Source ID - 8 bits
- Destination ID - 16 bits
- HARQ feedback enabled/disabled indicator - 1 bit
- Zone ID - 12 bits
- Communication range requirement - 4 bits determined by higher layer parameter sl-ZoneConfigMCR-Index

Referring to (a) or (b) of FIG. 8, in step S830, the first UE may receive the PSFCH. For example, the first UE and the second UE may determine a PSFCH resource, and the second UE may transmit HARQ feedback to the first UE using the PSFCH resource.

Referring to (a) of FIG. 8, in step S840, the first UE may transmit SL HARQ feedback to the base station through the PUCCH and/or the PUSCH.

Hereinafter, a hybrid automatic repeat request (HARQ) procedure will be described.

For example, the SL HARQ feedback may be enabled for unicast. For example, the SL HARQ feedback may be enabled for groupcast. For example, two HARQ feedback options may be supported for groupcast.
(1) Groupcast option 1: After the receiving UE decodes the PSCCH of which the target is the receiving UE, if the receiving UE fails in decoding of a transport block related to the PSCCH, the receiving UE may transmit negative acknowledgement (NACK) to the transmitting UE through a PSFCH. Otherwise, if the receiving UE decodes the PSCCH of which the target is the receiving UE and if the receiving UE successfully decodes the transport block related to the PSCCH, the receiving UE may not transmit positive acknowledgement (ACK) to the transmitting UE.
(2) Groupcast option 2: After the receiving UE decodes the PSCCH of which the target is the receiving UE, if the receiving UE fails in decoding of the transport block related to the PSCCH, the receiving UE may transmit NACK to the transmitting UE through the PSFCH. In addition, if the receiving UE decodes the PSCCH of which the target is the receiving UE and if the receiving UE successfully decodes the transport block related to the PSCCH, the receiving UE may transmit ACK to the transmitting UE through the PSFCH.

Hereinafter, UE procedure for reporting HARQ-ACK on sidelink will be described.

A UE can be indicated by an SCI format scheduling a PSSCH reception, in one or more sub-channels from a number of N^{PSSCH}_{subch} sub-channels, to transmit a PSFCH with HARQ-ACK information in response to the PSSCH reception. The UE provides HARQ-ACK information that includes ACK or NACK, or only NACK.

A UE can be provided, by sl-PSFCH-Period-r16, a number of slots in a resource pool for a period of PSFCH transmission occasion resources. If the number is zero, PSFCH transmissions from the UE in the resource pool are disabled. A UE expects that a slot t'ₖ^{SL} (0 ≤ k < T'ₘₐₓ) has a PSFCH transmission occasion resource if k mod N^{PSFCH}_{PSSCH} = 0, where t'ₖ^{SL} is a slot that belongs to the resource pool, T'ₘₐₓ is a number of slots that belong to the resource pool within 10240 msec, and N^{PSFCH}_{PSSCH} is provided by sl-PSFCH-Period-r16. A UE may be indicated by higher layers to not transmit a PSFCH in response to a PSSCH reception.If a UE receives a PSSCH in a resource pool and the HARQ feedback enabled/disabled indicator field in an associated SCI format 2-A or a SCI format 2-B has value 1, the UE provides the HARQ-ACK information in a PSFCH transmission in the resource pool. The UE transmits the PSFCH in a first slot that includes PSFCH resources and is at least a number of slots, provided by sl-MinTimeGapPSFCH-r16, of the resource pool after a last slot of the PSSCH reception.

A UE is provided by sl-PSFCH-RB-Set-r16 a set of M^{PSFCH}_{PRB,set} PRBs in a resource pool for PSFCH transmission in a PRB of the resource pool. For a number of N_{subch} sub-channels for the resource pool, provided by sl-NumSubchannel, and a number of PSSCH slots associated with a PSFCH slot that is less than or equal to N^{PSFCH}_{PSSCH}, the UE allocates the [(i+j·N^{PSFCH}_{PSSCH})·M^{PSFCH}_{subch,slot}, (i+1+j·N^{PSFCH}_{PSSCH})·M^{PSFCH}_{such,slot}-1] PRBs from the M_{PRB,set}^{PSFCH} PRBs to **slot i among the** PSSCH slots associated with the PSFCH slot and sub-channel j, where M^{PSFCH}_{subch,slot} = M^{PSFCH}_{PRB,set}/(N_{subch}·N^{PSFCH}_{PSSCH}), 0 ≤ i < N^{PSFCH}_{PSSCH}, 0 ≤ j < N_{subch}, and the allocation starts in an ascending order of i and continues in an ascending order of j. The UE expects that M^{PSFCH}_{PRB,set} is a multiple of N_{subch}·N^{PSFCH}_{PSSCH}.

A UE determines a number of PSFCH resources available for multiplexing HARQ-ACK information in a PSFCH transmission as R^{PSFCH}_{PRB,CS} = N^{PSFCH}_{type}·M^{PSFCH}_{subch,slot}·N^{PSFCH}_{CS} where N^{PSFCH}_{CS} is a number of cyclic shift pairs for the resource pool and, based on an indication by higher layers,
- N^{PSFCH}_{type} = 1 and the M^{PSFCH}_{subch,slot} PRBs are associated with the starting sub-channel of the corresponding PSSCH
- N^{PSFCH}_{type} = N^{PSSCH}_{subch} **and the** N^{PSSCH}_{subch}·M^{PSFCH}_{subch,slot} PRBs are associated with one or more sub-**channels from** the N^{PSSCH}_{subch} sub-channels of the corresponding PSSCH

The PSFCH resources are first indexed according to an ascending order of the PRB index, from the N^{PSFCH}_{type}·M^{PSFCH}_{subch,slot} PRBs, and then according to an ascending order of the cyclic shift pair index from the N^{PSFCH}_{CS} cyclic shift pairs.

A UE determines an index of a PSFCH resource for a PSFCH transmission in response to a PSSCH reception as (P_{ID} + M_{ID}) mod R^{PSFCH}_{PRB,CS} where P_{ID} is a physical layer source ID provided by SCI format 2-A or 2-B scheduling the PSSCH reception, and M_{ID} is the identity of the UE receiving the PSSCH as indicated by higher layers if the UE detects a SCI format 2-A with Cast type indicator field value of "01"; otherwise, M_{ID} is zero.

A UE determines a m₀ value, for computing a value of cyclic shift α, from a cyclic shift pair index corresponding to a PSFCH resource index and from N^{PSFCH}_{CS} using Table 4.

**[Table 4]**

| N^{PSFCH}_{CS} | m₀ | | | | | |
|---|---|---|---|---|---|---|
| | cyclic shift pair index 0 | cyclic shift pair index 1 | cyclic shift pair index 2 | cyclic shift pair index 3 | cyclic shift pair index 4 | cyclic shift pair index 5 |
| 1 | 0 | - | - | - | - | - |
| 2 | 0 | 3 | - | - | - | - |
| 3 | 0 | 2 | 4 | - | - | - |
| 6 | 0 | 1 | 2 | 3 | 4 | 5 |

The UE applies one cyclic shift from a cyclic shift pair to a sequence used for the PSFCH transmission.

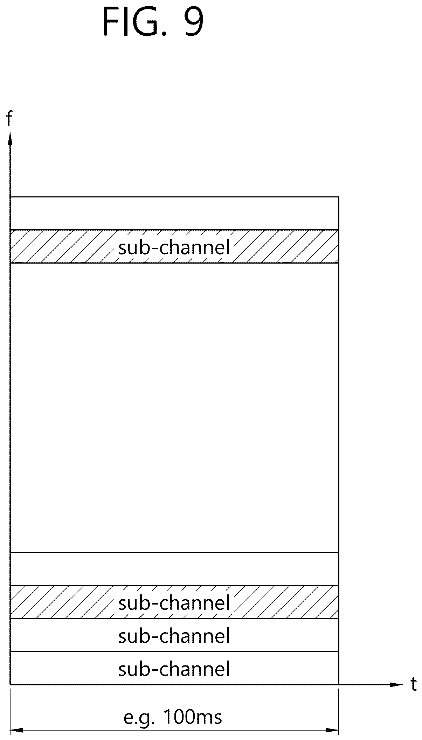

FIG. 9 shows a resource unit for CBR measurement, based on an embodiment of the present disclosure. The embodiment of FIG. 9 may be combined with various embodiments of the present disclosure.

Referring to FIG. 9, CBR may denote the number of sub-channels in which a measurement result value of a received signal strength indicator (RSSI) has a value greater than or equal to a pre-configured threshold as a result of measuring the RSSI by a UE on a sub-channel basis for a specific period (e.g., 100 ms). Alternatively, the CBR may denote a ratio of sub-channels having a value greater than or equal to a pre-configured threshold among sub-channels for a specific duration. For example, in the embodiment of FIG. 9, if it is assumed that a hatched sub-channel is a sub-channel having a value greater than or equal to a pre-configured threshold, the CBR may denote a ratio of the hatched sub-channels for a period of 100 ms. Additionally, the CBR may be reported to the base station.

For example, if a PSCCH and a PSSCH are multiplexed in a frequency domain, the UE may perform one CBR measurement for one resource pool. Herein, if a PSFCH resource is configured or pre-configured, the PSFCH resource may be excluded in the CBR measurement.

Further, congestion control considering a priority of traffic (e.g. packet) may be necessary. To this end, for example, the UE may measure a channel occupancy ratio (CR). Specifically, the UE may measure the CBR, and the UE may determine a maximum value CRlimitk of a channel occupancy ratio k (CRk) that can be occupied by traffic corresponding to each priority (e.g., k) based on the CBR. For example, the UE may derive the maximum value CRlimitk of the channel occupancy ratio with respect to a priority of each traffic, based on a predetermined table of CBR measurement values. For example, in case of traffic having a relatively high priority, the UE may derive a maximum value of a relatively great channel occupancy ratio. Thereafter, the UE may perform congestion control by restricting a total sum of channel occupancy ratios of traffic, of which a priority k is lower than i, to a value less than or equal to a specific value. Based on this method, the channel occupancy ratio may be more strictly restricted for traffic having a relatively low priority.

In addition thereto, the UE may perform SL congestion control by using a method of adjusting a level of transmit power, dropping a packet, determining whether retransmission is to be performed, adjusting a transmission RB size (MCS coordination), or the like.

Table 5 shows an example of SL CBR and SL RSSI.

**[Table 5]**

| SL CBR | |
|---|---|
| Definition | SL Channel Busy Ratio (SL CBR) measured in slot n is defined as the portion of sub-channels in the resource pool whose SL RSSI measured by the UE exceed a (pre-)configured threshold sensed over a CBR measurement window [n-a, n-1], wherein a is equal to 100 or 100·2^{µ} slots, according to higher layer parameter *sl-TimeWindowSizeCBR.* |
| Applicable for | RRC_IDLE intra-frequency, |
| | RRC_IDLE inter-frequency, |
| | RRC_CONNECTED intra-frequency, |
| | RRC_CONNECTED inter-frequency |

| SL RSSI | |
|---|---|
| Definition | Sidelink Received Signal Strength Indicator (SL RSSI) is defined as the linear average of the total received power (in [W]) observed in the configured sub-channel in OFDM symbols of a slot configured for PSCCH and PSSCH, starting from the 2nd OFDM symbol. |
| | For frequency range 1, the reference point for the SL RSSI shall be the antenna connector of the UE. For frequency range 2, SL RSSI shall be measured based on the combined signal from antenna elements corresponding to a given receiver branch. For frequency range 1 and 2, if receiver diversity is in use by the UE, the reported SL RSSI value shall not be lower than the corresponding SL RSSI of any of the individual receiver branches. |
| Applicable for | RRC_IDLE intra-frequency, |
| | RRC_IDLE inter-frequency, |
| | RRC_CONNECTED intra-frequency, |
| | RRC_CONNECTED inter-frequency |

Referring to Table 5, the slot index may be based on physical slot index.

Table 6 shows an example of SL channel occupancy ratio (CR).

**[Table 6]**

| | |
|---|---|
| Definition | Sidelink Channel Occupancy Ratio (SL CR) evaluated at slot n is defined as the total number of sub-channels used for its transmissions in slots [*n-a, n-1*] and granted in slots [*n, n+b*] divided by the total number of configured sub-channels in the transmission pool over [*n-a, n+b*]. |
| Applicable for | RRC_IDLE intra-frequency, |
| | RRC_IDLE inter-frequency, |
| | RRC_CONNECTED intra-frequency, |
| | RRC_CONNECTED inter-frequency |

| | |
|---|---|
| NOTE 1: a is a positive integer and b is 0 or a positive integer, a and b are determined by UE implementation with a+b+1 = 1000 or 1000·2^{u} slots, according to higher layer parameter sl-TimeWindowSizeCR, b < (a+b+1)/2, and n+b shall not exceed the last transmission opportunity of the grant for the current transmission. NOTE 2: SL CR is evaluated for each (re)transmission. NOTE 3: In evaluating SL CR, the UE shall assume the transmission parameter used at slot n is reused according to the existing grant(s) in slot [n+1, n+b] without packet dropping. NOTE 4: The slot index is based on physical slot index. NOTE 5: SL CR can be computed per priority level NOTE 6: A resource is considered granted if it is a member of a selected sidelink grant. | |

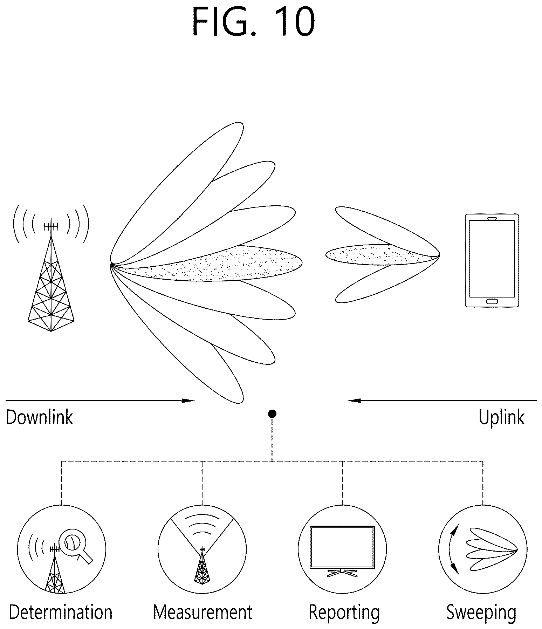

FIG. 10 shows beam management based on an embodiment of the present disclosure. The embodiment of FIG. 10 may be combined with various embodiments of the present disclosure.

Referring to FIG. 10, beam management may include beam determination, beam measurement, beam reporting, and/or beam sweeping. In the case of forming a beam using multiple antennas, a narrow antenna beam may be transmitted far in a specific direction, but may not cover the entire cell widely at once. Rather, if an antenna beam is formed in one direction, almost no antenna beam is formed in the other direction, so no signal may be transmitted. Therefore, in such cases, a transmitter or a receiver may transmit or receive data using beam forming, respectively. In this case, the transmitter or the receiver shall continuously update and manage the beam(s) used, which may be called beam management.

For example, the UE may perform the following operation-based sidelink FR2 (sidelink mmWave frequencies-based sidelink communication) operation.
- Beam sweeping operation: an operation that covers a spatial domain using transmit and/or receive beams for a certain time interval in a predefined manner
- Beam measurement operation: an operation that measures a reference signal (RS) transmitted by another device to find an RS whose measurement value is equal to or greater than a threshold
- Beam selection operation: an operation that selects the best beam (receive beam and/or transmit beam) based on the result of the beam measurement
- Beam reporting operation: an operation that reports the selected best beam to another device or the base station

Meanwhile, during sidelink communication, the UE may perform transmission and/or reception based on multiple panels and/or beam directions, in which case, it may be necessary to define a method for managing configurations such as the beam-related information or spatial domain transmission and/or reception filters (hereinafter referred to as a beam management method). In the present disclosure, sidelink communication may include Device-to-Device communication, Aircraft-to-Everything (A2X) communication, Vehicle-to-Everything (V2X) communication, and others.

Conventional sidelink communication did not consider the utilization of direction-specific beams. For example, an omni-directional beam was assumed or a beam without specific directionality was considered for a transmission beam and/or a reception beam. Meanwhile, next-generation communication systems are considering the utilization of direction-specific beams even in sidelink communication, and the transmission beam and/or reception beam management method between UEs is being discussed for this purpose.

Herein, the beam management method for sidelink communication may include a beam pairing method, which is the process of finding a transmission beam and reception beam pair between UEs. For example, if a first UE and a second UE perform sidelink communication between one or more UEs, the first UE may transmit resources for beam measurement, and the second UE may measure the reception sensitivity for all or a partial combination of transmission beams and reception beams, and then report its preferred transmission beam and/or reception beam information to the first UE. The first UE may perform communication to the second UE using the reported transmission beam.

Herein, the beam management method for sidelink communication may include a multi-beam transmission method, which is the process of transmitting and receiving signals through one or more transmission beams and/or reception beams between UEs. If the first UE and the second UE perform sidelink communication, the first UE may transmit a signal by applying a different transmission beam depending on a transmission resource, and the second UE may receive a signal by applying a different reception beam depending on a transmission resource.

Herein, in the present disclosure, to support the beam pairing method and/or the multi-beam transmission method, resource sets may be distinguished based on a beam type during sidelink-based communication between UEs. In addition, a scheme is proposed where one or more of these resource sets are configured as anchor resources to which a common beam or a beam without specific directionality is applied, to support the beam pairing method and/or the multi-beam transmission method. The proposed schemes in the following discussion describe sidelink-based communication between UEs, but the proposed schemes of the present disclosure can obviously be extended and applied to communication between arbitrary nodes. Hereinafter, a beam may refer to a transmission beam and/or a reception beam. Hereinafter, a Type 1 beam and/or a Type 2 beam may refer to a transmission beam type and/or a reception beam type.

[Proposed Scheme #01] When performing communication between a first UE and a second UE, a first resource set to which a first type beam is applied and/or a second resource set to which a second type beam is applied may be pre-agreed/configured between the UEs. Herein, for example, the first type beam may include a common beam whose directionality is not specified. Herein, for example, the second type beam may include a dedicated beam whose directionality is specified and/or a common beam whose directionality is not specified.

For example, when performing sidelink-based communication between the first UE and the second UE in a next-generation communication system based on an embodiment of the present disclosure, two main methods may be considered for initiating a beam pairing procedure. First, a beam measurement and reporting procedure may be performed using only pre-shared information between the UEs before beam pairing. Second, a beam measurement and reporting procedure may be performed using available resources before beam pairing, apart from pre-shared information between the UEs before beam pairing. Considering that sidelink-based communication should be able to support broadcast and/or groupcast transmission in addition to unicast transmission, securing available inter-UE resources before beam pairing among the two methods may be more desirable. For example, when performing unicast transmission between UEs, a transmitting beam and/or a receiving beam whose directionality is specified may be applied by performing beam pairing, and when performing broadcast and/or groupcast transmission between UEs, a transmitting beam and/or a receiving beam whose directionality is not specified may be applied without performing beam pairing.

Therefore, in the present disclosure, when performing communication between the first UE and the second UE, the first resource set to which the first type beam is applied and/or the second resource set to which the second type beam is applied may be pre-agreed/configured between the UEs. For example, the first type beam may refer to a common beam whose directionality is not specified, and the second type beam may include the common beam and/or a dedicated beam whose directionality is specified. Herein, since the first resource set has no constraint requiring the UE to form a beam in a specific direction, it can support communication between the first UE and the second UE even before beam pairing and/or if beam pairing is unstable. Therefore, the first resource set may serve as an anchor that guarantees minimum connectivity for sidelink communication.

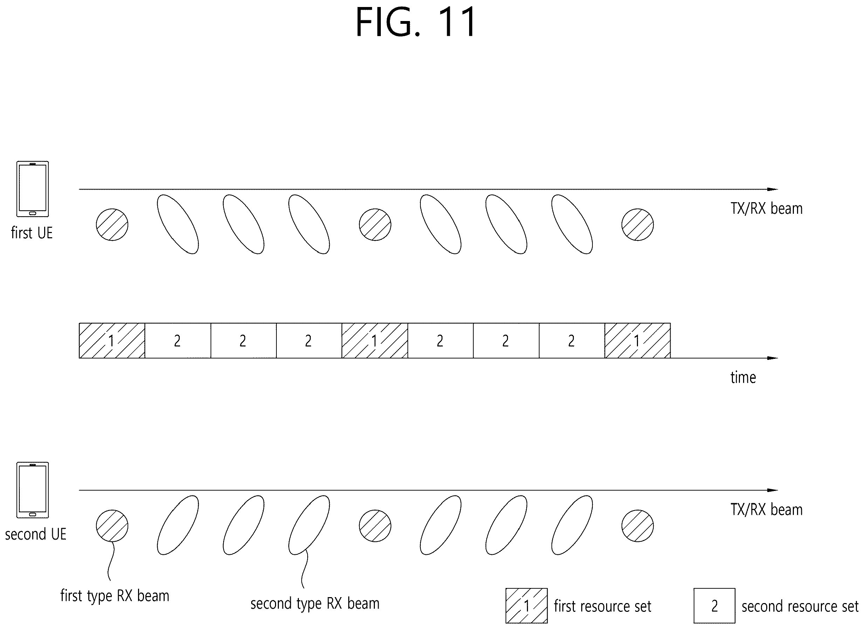

FIG. 11 shows a first resource set to which a first type beam is applied and a second resource set to which a second type beam is applied, based on an embodiment of the present disclosure. The embodiment of FIG. 11 may be combined with various embodiments of the present disclosure.

[Proposed Scheme #01] may be applied in combination with other proposed scheme(s) as long as the proposed operations do not conflict.

[Proposed Scheme #01-01] When performing communication between a first UE and a second UE, when pre-agreeing/configuring a first resource set to which a first type beam is applied and/or a second resource set to which a second type beam is applied between the UEs, the first UE may reserve and/or indicate beam measurement resource(s) within the second resource set by transmitting a second control signal within the first resource set, and the second UE may perform beam measurement by utilizing the beam measurement resource(s). Herein, for example, the first type beam may include a common beam whose directionality is not specified. Herein, for example, the second type beam may include a dedicated beam whose directionality is specified and/or a common beam whose directionality is not specified. Herein, for example, the second control signal may collectively indicate beam identifier information and/or beam-related information corresponding to the beam measurement resource(s) transmitted within the second resource set. Herein, for example, the second control signal may be a first sidelink control information (SCI) and/or a second SCI and/or a MAC control element (CE).

For example, when performing sidelink-based communication between the first UE and the second UE in a next-generation communication system based on an embodiment of the present disclosure, the process of measuring and comparing the reception sensitivity for each combination of a transmitting beam and a receiving beam should precede the selection of a pair of a transmitting beam and/or a receiving beam. To measure the reception sensitivity for a combination of a transmitting beam and a receiving beam, the receiving UE should be able to know the location of the resource where the measurement resource corresponding to a specific transmitting beam and/or transmitting beam identifier is transmitted, in order to measure the reception sensitivity for the specific transmitting beam and/or transmitting beam identifier. For example, when the receiving UE intends to measure the reception sensitivity for each of the M combinations between a specific transmitting beam and M receiving beams, the receiving UE should know the transmission location of M measurement resources to which the specific transmitting beam is applied. Herein, if an initial beam pairing procedure is to be supported, the transmission location of the beam measurement resource(s) should be able to be conveyed to the receiving UE before beam pairing.

Therefore, in the present disclosure, when performing communication between the first UE and the second UE, the first resource set to which the first type beam is applied and/or the second resource set to which the second type beam is applied may be pre-agreed/configured between the UEs, and the first UE may reserve and/or indicate the beam measurement resource(s) within the second resource set by transmitting a second control signal within the first resource set. For example, the first type beam may refer to a common beam whose directionality is not specified, and the second type beam may include the common beam and/or a dedicated beam whose directionality is specified. Herein, since the first resource set has no constraint requiring the UE to form a beam in a specific direction, it can support communication between the first UE and the second UE before beam pairing. Therefore, the first resource set may serve as an anchor that informs the beam measurement resource(s) in the second resource set where the beam direction can be specified. Based on the proposed scheme of the present disclosure, by informing the transmission of the beam measurement resource(s) in a resource set where beam directionality can be specified from a resource set where beam directionality is not specified, there is an advantage that the transmission location of the beam measurement resource(s) for initial beam pairing can be stably conveyed before beam pairing. Furthermore, since the first resource set allows sidelink communication without a beam pairing procedure, it can be utilized as a stable anchor resource that supports data transmission whose directionality is not specified, in addition to the reservation and/or indication of the beam measurement resource(s).

[Proposed Scheme #01-01] may be applied in combination with other proposed scheme(s) as long as the proposed operations do not conflict.

[Proposed Scheme #01-02] When performing communication between a first UE and a second UE, when pre-agreeing/configuring a first resource set to which a first type beam is applied and/or a second resource set to which a second type beam is applied between the UEs, the first UE may reserve and/or indicate beam measurement resource(s) within the second resource set by transmitting a second control signal within the first resource set, and the second UE may perform beam measurement by utilizing the beam measurement resource(s) and then report a beam measurement result, and the first UE may apply a receiving beam corresponding to a transmitting beam applied to a first resource upon receiving the beam measurement result. Herein, for example, the first type beam may include a common beam whose directionality is not specified. Herein, for example, the second type beam may include a dedicated beam whose directionality is specified and/or a common beam whose directionality is not specified. Herein, for example, the second UE may report the beam measurement result using a resource within the first resource set and/or a resource within the second resource set. Herein, for example, the transmitting beam applied when the second UE reports the beam measurement result may be a transmitting beam corresponding to a receiving beam applied upon receiving the second control signal, or a transmitting beam corresponding to an optimal transmitting beam and/or an optimal receiving beam discovered by the beam measurement resource(s). Herein, for example, the beam measurement result report may include a success/failure status of beam pairing. For example, if there is no pair of transmitting and receiving beams whose reception sensitivity is equal to or greater than a reference threshold, beam pairing may be reported as failed. Herein, for example, the second control signal may collectively indicate beam identifier and/or beam-related information corresponding to the beam measurement resource(s) transmitted within the second resource set. Herein, for example, the second control signal may be a first sidelink control information (SCI) and/or a second SCI and/or a MAC control element (CE). Herein, for example, reservation information for transmission resource(s) within the second resource set may or may not be transmitted depending on a channel congestion level, which is expressed by an indicator such as Channel Busy Ratio (CBR) and/or Channel occupancy Ratio (CR). For example, if CBR and/or CR is high, transmitting resource reservation information may be meaningless, and thus the transmission of resource reservation information may be omitted.

For example, when performing sidelink-based communication between the first UE and the second UE in a next-generation communication system based on an embodiment of the present disclosure, the process of measuring and comparing the reception sensitivity for each combination of a transmitting beam and a receiving beam should precede the selection of a pair of a transmitting beam and/or a receiving beam. To measure the reception sensitivity for a combination of a transmitting beam and a receiving beam, the receiving UE should be able to know the location of the resource where the measurement resource corresponding to a specific transmitting beam and/or transmitting beam identifier is transmitted, in order to measure the reception sensitivity for the specific transmitting beam and/or transmitting beam identifier. Herein, the transmission of beam measurement resource(s), which requires the configuration of a transmitting beam and/or a receiving beam in a specific direction, may be indicated utilizing available resources before beam pairing. For example, based on an embodiment of the proposed scheme(s) of the present disclosure, the first resource set to which the first type beam is applied and/or the second resource set to which the second type beam is applied may be pre-agreed and/or configured between the UEs, and the first UE may reserve and/or indicate the beam measurement resource(s) within the second resource set by transmitting a second control signal within the first resource set. For example, the first type beam may refer to a common beam whose directionality is not specified, and the second type beam may include the common beam and/or a dedicated beam whose directionality is specified. Herein, for a beam pairing procedure, the second UE may report the beam measurement result utilizing the beam measurement resource(s) to the first UE. Herein, since the first UE does not yet know which transmitting beam and receiving beam pair the second UE has selected as the optimal beam pair during the beam measurement procedure, the first UE may assume a receiving beam corresponding to a transmitting beam transmitted through the second control signal when receiving the beam measurement result reported by the second UE. For example, the second UE may report the beam measurement result using a resource within the first resource set whose beam directionality is not specified. If the first UE intends to apply a receiving beam corresponding to one of the transmitting beams of the beam measurement resources upon receiving the beam measurement result reported by the second UE, this receiving resource should be configured as a dedicated resource for the second UE, since only reception with specified directionality is allowed, which may severely restrict resource utilization. The proposed scheme of the present disclosure has the advantage of relaxing the receiving beam constraint for the reporting resource while still allowing the receiving UE to report the beam measurement result.

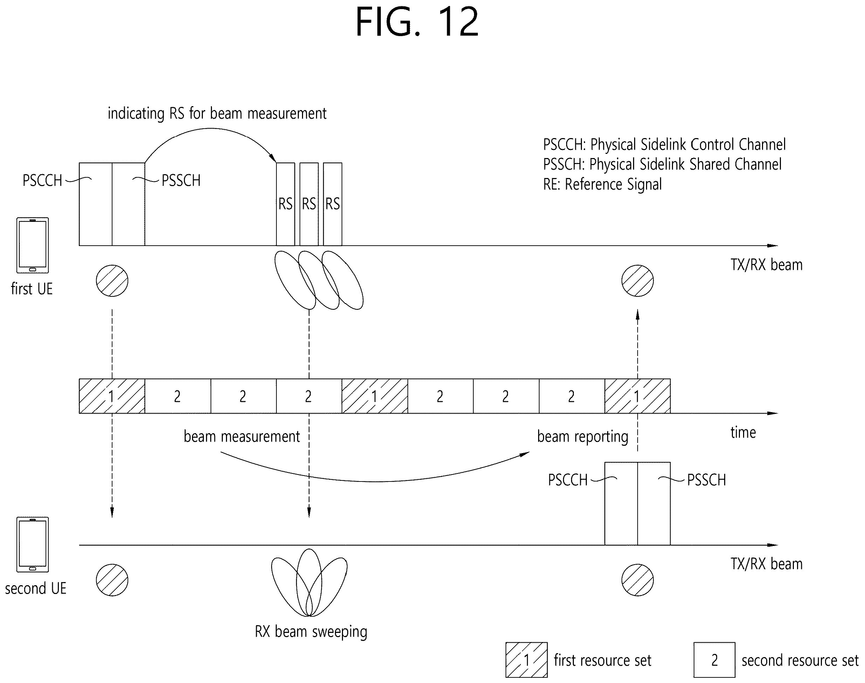

FIG. 12 shows beam measurement and/or beam reporting based on a first resource set and/or a second resource set, based on an embodiment of the present disclosure. The embodiment of FIG. 12 may be combined with various embodiments of the present disclosure.

[Proposed Scheme #01-02] may be applied in combination with other proposed scheme(s) as long as the proposed operations do not conflict.

[Proposal #01-03] When performing communication between a first UE and a second UE, when pre-agreeing/configuring a first resource set to which a first type beam is applied and/or a second resource set to which a second type beam is applied between the UEs, the UE may configure a first sensing resource set with resources within the first resource set, and the UE may utilize the resource reservation information indicated in the control signal(s) within the first sensing resource set and/or the measured reception sensitivity within the first sensing resource set when selecting a transmission resource within the first resource set and/or selecting a transmission resource within the second resource set. Herein, for example, the first type beam may include a common beam whose directionality is not specified. Herein, for example, the second type beam may include a dedicated beam whose directionality is specified and/or a common beam whose directionality is not specified. Herein, for example, the UE may derive the expected reception sensitivity by reflecting a transmitting beam gain and/or a receiving beam gain on the measured reception sensitivity within the first sensing resource set when predicting the reception sensitivity for the reserved resources within the second resource set. Herein, for example, information related to the transmitting beam gain and/or the receiving beam gain may be pre-agreed and/or configured between the UEs or conveyed through a control signal.

For example, when performing sidelink-based communication between the first UE and the second UE in a next-generation communication system based on an embodiment of the present disclosure, the UE may perform resource selection based on a sensing result. For example, the UE may define a candidate resource set for resource reservation and/or allocation, and the UE may configure a sensing resource set that precedes the candidate resource set. The UE may identify reserved resources by detecting control signals (e.g., SCI) transmitted by other UEs in the sensing resource set, and the UE may measure reception sensitivity (e.g., reference signal received power (RSRP)) by utilizing reference signals in the sensing resource set. In addition, the UE may predict reception sensitivity due to reserved resources with the measured reception sensitivity, and the UE may select transmission resource(s) from among remaining resources excluding resources in which related reception sensitivity is greater than or equal to a predetermined reference value. Meanwhile, in a next-generation communication system based on an embodiment of the present disclosure, if beam pairing for sidelink-based communication is supported, and if sensing-based resource selection is applied for resources in which a transmission beam and/or a reception beam have directionality, a problem of incorrectly determining an interference influence from another UE, such as a hidden node problem, may occur. For example, assume that a first UE selects a resource determined to have low interference by performing sensing in a specific beam direction and performs transmission to a second UE in the beam direction. Herein, a signal from other UE(s) which was not observed during sensing in the specific beam direction may have existed, and interference from the other UE(s) may act significantly from a reception perspective of the second UE.

Therefore, in the present disclosure, when performing communication between the first UE and the second UE, when the first resource set to which the first type beam is applied and/or the second resource set to which the second type beam is applied are pre-agreed/configured between the UEs, the first sensing resource set may be configured with resources in the first resource set, and resource reservation information indicated in control signal(s) in the first sensing resource set and/or reception sensitivity measured in the first sensing resource set may be utilized during transmission in the first resource set and/or transmission in the second resource. For example, the first type beam may refer to a common beam whose directionality is not specified, and the second type beam may include the common beam and/or a dedicated beam whose directionality is specified. Herein, since the first resource set has no constraint requiring the UE to form a beam in a specific direction, sensing in all directions is possible, and a hidden node problem according to beam directionality can be mitigated. Based on the proposed scheme of the present disclosure, when performing transmission resource selection whose beam directionality is specified, by utilizing a sensing resource set configured with resources whose directionality is not specified, there is an advantage of mitigating occurrence of a hidden node problem between transmission resources whose beam directionality is specified.

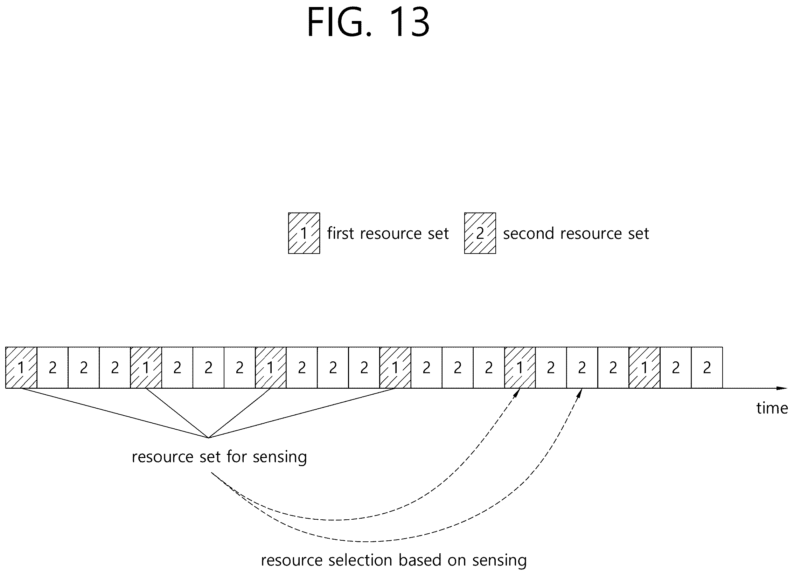

FIG. 13 shows sensing based on a first resource set, based on an embodiment of the present disclosure. The embodiment of FIG. 13 may be combined with various embodiments of the present disclosure.

[Proposed Scheme #01-03] may be applied in combination with other proposed scheme(s) as long as the proposed operations do not conflict.

[Proposed Scheme #01-04] When performing communication between a first UE and a second UE, when a first resource set to which a first type beam is applied and/or a second resource set to which a second type beam is applied are pre-agreed/configured between UEs, the UE may configure a second sensing resource set with resources in the second resource set, and the UE may utilize resource reservation information indicated in control signal(s) in the second sensing resource set and/or reception sensitivity measured in the second sensing resource set when selecting a (transmission) resource in the second resource set. Herein, for example, the first type beam may include a common beam whose directionality is not specified. Herein, for example, the second type beam may include a dedicated beam whose directionality is specified and/or a common beam whose directionality is not specified. Herein, for example, the UE may utilize only a sensing result detected in a reception beam direction corresponding to a transmission beam direction to be applied for resource reservation. For example, only a result sensed by applying the common beam may be utilized.

For example, when performing sidelink-based communication between the first UE and the second UE in a next-generation communication system based on an embodiment of the present disclosure, the UE may perform resource selection based on a sensing result. For example, as an embodiment according to proposed scheme(s) of the present disclosure, the first resource set to which the first type beam is applied and/or the second resource set to which the second type beam is applied may be pre-agreed/configured between the UEs, a first sensing resource set may be configured with resources in the first resource set, and resource reservation information indicated in control signal(s) in the first sensing resource set and/or reception sensitivity measured in the first sensing resource set may be utilized during transmission in the first resource set and/or transmission in the second resource. For example, the first type beam may refer to a common beam whose directionality is not specified, and the second type beam may include the common beam and/or a dedicated beam whose directionality is specified. Herein, since the first sensing resource set allows sensing in all directions, it may be a scheme for mitigating a hidden node problem, etc. Meanwhile, the UE can detect control information transmitted by other nodes even in the second resource set. Herein, although there is a limitation that the information enables reception only in a specific beam direction depending on cases, if detected information exists, utilizing the corresponding information as additional sensing information may be a direction for increasing sensing accuracy.

Therefore, in the present disclosure, when performing communication between the first UE and the second UE, when the first resource set to which the first type beam is applied and/or the second resource set to which the second type beam is applied are pre-agreed/configured between the UEs, the UE may configure a second sensing resource set with resources in the second resource set, and the UE may utilize resource reservation information indicated in control signal(s) in the second sensing resource set and/or reception sensitivity measured in the second sensing resource set when selecting a (transmission) resource in the second resource set. For example, the UE utilizes resource reservation information indicated in control signal(s) in the first sensing resource set and/or reception sensitivity measured in the first sensing resource set as primary information, and the UE may utilize resource reservation information indicated in control signal(s) in the second sensing resource set and/or reception sensitivity measured in the second sensing resource set as secondary information. Based on the proposed scheme of the present disclosure, by allowing the UE to utilize both sensing results in the first resource set and the second resource set during sensing-based resource selection, there is an advantage that an accurate sensing result can be obtained.

[Proposed Scheme #01-04] may be applied in combination with other proposed scheme(s) as long as the proposed operations do not conflict.

[Proposed Scheme #01-05] When performing communication between a first UE and a second UE, when a first resource set to which a first type beam is applied and/or a second resource set to which a second type beam is applied are pre-agreed/configured between UEs, the UE may reserve a (transmission) resource in the first resource set by transmitting a first control signal in the first resource set, and the UE may reserve a (transmission) resource in the second resource set by transmitting a second control signal (distinguished from the first control signal) in the first resource set. Herein, for example, the first type beam may include a common beam whose directionality is not specified. Herein, for example, the second type beam may include a dedicated beam whose directionality is specified and/or a common beam whose directionality is not specified. Herein, for example, the first control signal may be a first sidelink control information (SCI), and the second control signal may be a second SCI and/or a MAC control element (CE). Herein, for example, the second control signal may indicate beam identifier information corresponding to a (transmission) resource reserved in the second resource set together.

For example, when performing sidelink-based communication between the first UE and the second UE in a next-generation communication system based on an embodiment of the present disclosure, the UE may perform resource selection based on a sensing result. For example, the UE may define a candidate resource set for resource reservation and/or allocation, and the UE may configure a sensing resource set preceding the candidate resource set. The UE may identify reserved resources by detecting control signals (e.g., SCI) transmitted by other UEs in the sensing resource set, and the UE may measure reception sensitivity (e.g., reference signals received power (RSRP)) by utilizing reference signals in the sensing resource set. In addition, the UE may predict reception sensitivity due to reserved resources with the measured reception sensitivity, and the UE may select transmission resource(s) from among remaining resources excluding resources in which related reception sensitivity is greater than or equal to a predetermined reference value. Herein, as an embodiment according to proposed scheme(s) of the present disclosure, assume that the first resource set to which the first type beam is applied and/or the second resource set to which the second type beam is applied are pre-agreed/configured between the UEs, the UE configures a first sensing resource set with resources in the first resource set, and resource reservation information indicated in control signal(s) in the first sensing resource set and/or reception sensitivity measured in the first sensing resource set is utilized during transmission in the first resource set and/or transmission in the second resource. For example, the first type beam may refer to a common beam whose directionality is not specified, and the second type beam may include the common beam and/or a dedicated beam whose directionality is specified. In this case, transmission resources reserved in the first resource set and/or the second resource set should be indicated in the first sensing resource set. Herein, since the first sensing resource set is configured with resources in the first resource set, reservation information for the resources to be transmitted in the future may be indicated through a control signal in the first resource set. Herein, reservation information for resources to be transmitted in the second resource set should include transmission beam and/or reception beam related information, and needs to be distinguished from reservation information for resources to be transmitted in the first resource set whose directionality of a beam is not specified.

Therefore, in the present disclosure, when performing communication between the first UE and the second UE, when the first resource set to which the first type beam is applied and/or the second resource set to which the second type beam is applied are pre-agreed/configured between the UEs, the UE may reserve a transmission resource in the first resource set by transmitting a first control signal in the first resource set, and the UE may reserve a transmission resource in the second resource set by transmitting a second control signal (distinguished from the first control signal) in the first resource set. For example, reservation information for transmission resources is transmitted through a control signal in the first resource set, wherein resources to be transmitted in the first resource set may be reserved and/or indicated by a first SCI, and resources to be transmitted in the second resource set may be reserved and/or indicated by a second SCI and/or a MAC CE. Based on the proposed scheme of the present disclosure, control signals suitable for resource reservation and/or indication in each set can be configured separately for the first and second resource sets, and through this, there is an advantage that resource reservation information can be efficiently delivered.

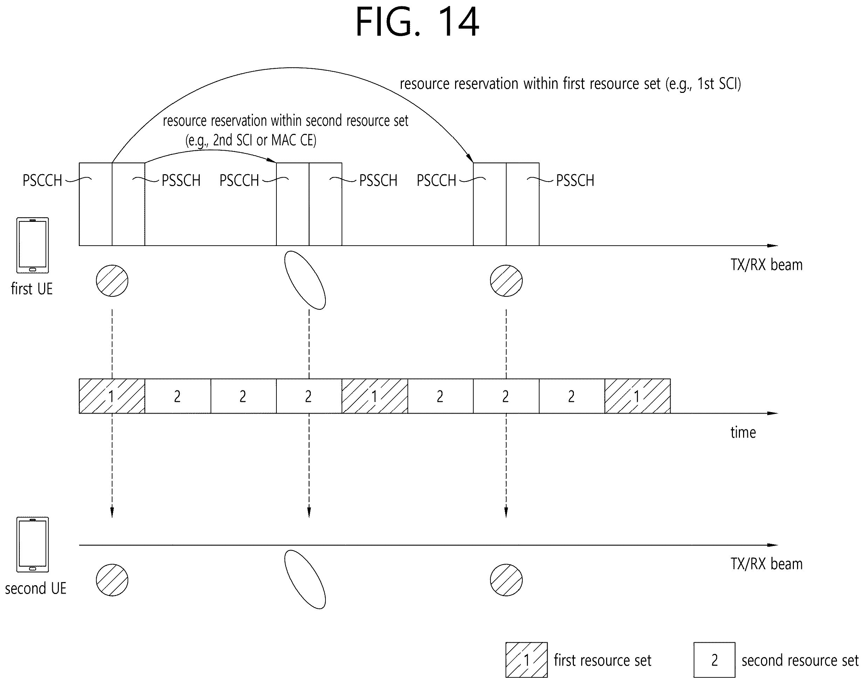

FIG. 14 shows a method in which a UE reserves a resource in a second resource set by transmitting a control signal in a first resource set, based on an embodiment of the present disclosure. The embodiment of FIG. 14 may be combined with various embodiments of the present disclosure.

[Proposed Scheme #01-05] may be applied in combination with other proposed scheme(s) as long as the proposed operations do not conflict.

[Proposed Scheme #01-06] When performing communication between a first UE and a second UE, when a first resource set to which a first type beam is applied and/or a second resource set to which a second type beam is applied are pre-agreed/configured between the UEs, the UE may reserve a (transmission) resource in the second resource set by transmitting a third control signal in the second resource set. Herein, for example, the first type beam may include a common beam whose directionality is not specified. Herein, for example, the second type beam may include a dedicated beam whose directionality is specified and/or a common beam whose directionality is not specified. Herein, for example, the third control signal may be a first sidelink control information (SCI) and/or a second SCI and/or a MAC control element (CE). Herein, for example, the third control signal may indicate beam identifier information corresponding to a (transmission) resource reserved in the second resource set together.

For example, when performing sidelink-based communication between the first UE and the second UE in a next-generation communication system based on an embodiment of the present disclosure, the UE may perform resource selection based on a sensing result. For example, as an embodiment according to proposed scheme(s) of the present disclosure, when pre-agreeing and/or configuring the first resource set to which the first type beam is applied and/or the second resource set to which the second type beam is applied between the UEs, the UE may configure a second sensing resource set with resources in the second resource set, and the UE may utilize resource reservation information indicated in control signal(s) in the second sensing resource set and/or reception sensitivity measured in the second sensing resource set when selecting a (transmission) resource in the second resource set. For example, the first type beam may refer to a common beam whose directionality is not specified, and the second type beam may include the common beam and/or a dedicated beam whose directionality is specified. Herein, since the second sensing resource set is configured with resources in the second resource set, reservation information for resources to be transmitted in the future in the second resource set may be indicated through a control signal in the second resource set. Characteristically, control information in the first resource set can reserve resources in the first and second resource sets, but control information in the second resource set can reserve only resources in the second resource set. This is because the first resource set is a resource set in which the first type beam is assumed and which a plurality of UEs are expected to monitor, but the second resource set is a resource set in which the second type beam is assumed and which only some UEs are expected to monitor. When detecting reserved information for the second resource set, the UE may utilize a control signal transmitted in the first resource set and/or a control signal transmitted in the second resource set. Based on the proposed scheme of the present disclosure described above, main resource reservation for the first and second resource sets may be performed by a control signal in the first resource set, and an operation of informing resource reservation information in the second resource set again by a control signal in the second resource set may be performed. Through this, there is an advantage of increasing reliability of reservation information delivery by providing resource reservation information through various paths.

[Proposed Scheme #01-06] may be applied in combination with other proposed scheme(s) as long as the proposed operations do not conflict.

[Proposed Scheme #01-07] When performing communication between a first UE and a second UE, when a first resource set to which a first type beam is applied and/or a second resource set to which a second type beam is applied are pre-agreed/configured between the UEs, when the UE configures a candidate resource set for resource reservation and/or selection, a first candidate resource set configured with resources in the first resource set and a second candidate resource set configured with resources in the second resource set may be configured separately. Herein, for example, the first type beam may include a common beam whose directionality is not specified. Herein, for example, the second type beam may include a dedicated beam whose directionality is specified and/or a common beam whose directionality is not specified.

For example, when performing sidelink-based communication between the first UE and the second UE in a next-generation communication system based on an embodiment of the present disclosure, resource selection may be performed based on a sensing result. For example, the UE may define a candidate resource set for resource reservation and/or allocation, and the UE may configure a sensing resource set preceding the candidate resource set. The UE may identify reserved resources by detecting control signals (e.g., SCI) transmitted by other UEs in the sensing resource set, and may measure reception sensitivity (e.g., reference signals received power (RSRP)) by utilizing reference signals in the sensing resource set. In addition, the UE may predict reception sensitivity due to reserved resources with the measured reception sensitivity, and the UE may select transmission resource(s) from among remaining resources excluding resources in which related reception sensitivity is greater than or equal to a predetermined reference value. Herein, as an embodiment according to proposed scheme(s) of the present disclosure, when pre-agreeing/configuring the first resource set to which the first type beam is applied and/or the second resource set to which the second type beam is applied between the UEs, it may be preferable that the candidate resource set is distinguished for each beam type. For example, the first type beam may refer to a common beam whose directionality is not specified, and the second type beam may include the common beam and/or a dedicated beam whose directionality is specified. For example, for the first candidate resource set configured with resources in the first resource set, the UE may configure a first sensing resource set configured with resources in the first resource set, and the UE may utilize this to perform sensing-based resource reservation and/or selection. Herein, within the first sensing resource set, resource reservation information in the first resource set may be indicated by a first SCI which legacy UEs can demodulate, and thus coexistence of legacy UEs not supporting the second type beam in the first resource set can be allowed. For example, legacy UEs may operate as if the first resource set is given as a resource pool. Also, for example, for the second candidate resource set configured with resources in the second resource set, the UE may configure a first sensing resource set configured with resources in the first resource set, and the UE may utilize this to perform sensing-based resource reservation and/or selection. Herein, within the first sensing resource set, resource reservation information in the second resource set may be indicated by a second SCI or a MAC CE which legacy UEs cannot demodulate, and thus coexistence of legacy UEs not supporting the second type beam in the second resource set may be difficult. Based on the proposed scheme of the present disclosure, for transmission resource sets to which different beam types are applied, by distinguishing a candidate resource set for each beam type, there is an advantage of enabling application of mutually independent sensing and/or resource selection schemes.

[Proposed Scheme #01-07] may be applied in combination with other proposed scheme(s) as long as the proposed operations do not conflict.

[Proposed Scheme #0 1-08] When performing communication between a first UE and a second UE, when a first resource set to which a first type beam is applied and/or a second resource set to which a second type beam is applied are pre-agreed/configured between the UEs, when the UE configures a preferred resource set and/or a non-preferred resource set for resource reservation and/or selection, a first preferred/non-preferred resource set configured with resources in the first resource set and a second preferred/non-preferred resource set configured with resources in the second resource set may be configured separately. Herein, for example, the first type beam may include a common beam whose directionality is not specified. Herein, for example, the second type beam may include a dedicated beam whose directionality is specified and/or a common beam whose directionality is not specified. Herein, for example, the transmitting UE may select final (transmission) resource(s) by utilizing the preferred resource set and/or the non-preferred resource set.

For example, when performing sidelink-based communication between the first UE and the second UE in a next-generation communication system based on an embodiment of the present disclosure, the receiving UE may report a preferred resource set and/or a non-preferred resource set from a perspective of a receiver to the transmitting UE. Herein, as an embodiment according to proposed scheme(s) of the present disclosure, when pre-agreeing/configuring the first resource set to which the first type beam is applied and/or the second resource set to which the second type beam is applied between the UEs, it may be preferable that the preferred/non-preferred resource set is distinguished for each beam type. For example, the first type beam may refer to a common beam whose directionality is not specified, and the second type beam may include the common beam and/or a dedicated beam whose directionality is specified. For example, the receiving UE may provide a first preferred/non-preferred resource set configured with resources in the first resource set and a second preferred/non-preferred resource set configured with resources in the second resource set to the transmitting UE. Herein, the transmitting UE may utilize the first preferred/non-preferred resource set when selecting resource(s) in the first resource set, and the transmitting UE may utilize the second preferred/non-preferred resource set when selecting resource(s) in the second resource set. Based on the proposed scheme of the present disclosure, for resource sets to which different beam types are applied, by distinguishing a preferred/non-preferred resource set for each beam type, there is an advantage of enabling application of mutually independent sensing and/or resource selection schemes.

[Proposed Scheme #01-08] may be applied in combination with other proposed scheme(s) as long as the proposed operations do not conflict.

[Proposed Scheme #01-09] When performing communication between a first UE and a second UE, when a first resource set to which a first type beam is applied and/or a second resource set to which a second type beam is applied are pre-agreed/configured between UEs, the first type beam and the second type beam may be defined to distinguish reception beam types usable in the first resource set and the second resource set, respectively. Herein, for example, the first type beam may refer to a common reception beam whose directionality is not specified or a reception beam usable when not performing beam pairing-based communication. Herein, for example, the second type beam may refer to a dedicated reception beam whose directionality is specified or a reception beam usable when performing beam pairing-based communication. Herein, for example, a transmission beam applicable to the first resource set and/or the second resource set may not be restricted.

For example, when performing sidelink-based communication between the first UE and the second UE in a next-generation communication system based on an embodiment of the present disclosure, resources for broadcast transmission and/or groupcast transmission between the UEs may be supported. For example, resource sets for communication between the UEs may be divided into the first resource set and the second resource set, and the first type beam and the second type beam may be allowed in each resource set. Herein, the first type beam and the second type beam may be a restriction on a reception beam type. For example, the first type beam may refer to a common reception beam whose directionality is not specified or a reception beam usable when not performing beam pairing-based communication. For example, the second type beam may refer to a dedicated reception beam whose directionality is specified or a reception beam usable when performing beam pairing-based communication. For example, a transmitting UE may transmit broadcast data and/or groupcast data through the first resource set, and a receiving UE may attempt reception with an omni-directional beam in the first resource set. For example, the transmitting UE may transmit unicast data through the second resource set, and the receiving UE may attempt reception with an omni-directional beam and/or a directional beam in the second resource set.

Herein, as a variation of [Proposed Scheme #01-09], when performing communication between a first UE and a second UE, when pre-agreeing/configuring a first resource set to which a first type beam is applied and/or a second resource set to which a second type beam is applied between UEs, a scheme of defining the first type beam and the second type beam to distinguish transmission beam types usable in the first resource set and the second resource set, respectively, may also be considered. Herein, a reception beam applicable to the first resource set and/or the second resource set may not be restricted.

[Proposed Scheme #01-09] may be applied in combination with other proposed scheme(s) as long as the proposed operations do not conflict.

[Proposed Scheme #01-10] When performing communication between a first UE and a second UE, when a first resource set to which a first type beam is applied and/or a second resource set to which a second type beam is applied are pre-agreed/configured between the UEs, the UE may define a candidate resource set for transmission resource selection with resources in the first resource set and the second resource set, and the UE may exclude a resource in which reception sensitivity of a reserved resource transmission in the candidate resource set is greater than or equal to a reference value. In this case, the reference value may be applied differently for the first resource set and the second resource set. Herein, for example, the first type beam may refer to a common beam whose directionality is not specified or a beam usable when not performing beam pairing-based communication. Herein, for example, the second type beam may refer to a dedicated beam whose directionality is specified or a beam usable when performing beam pairing-based communication.

For example, when performing sidelink-based communication between the first UE and the second UE in a next-generation communication system based on an embodiment of the present disclosure, the UE may perform resource selection based on a sensing result. For example, the UE may define a candidate resource set for transmission resource selection, and the UE may configure a sensing resource set preceding the candidate resource set. The UE may identify reserved resources by detecting control signals (e.g., SCI) transmitted by other UEs in the sensing resource set, and the UE may measure reception sensitivity (e.g., reference signals received power (RSRP)) by utilizing reference signals in the sensing resource set. In addition, the UE may predict reception sensitivity due to reserved resources with the measured reception sensitivity, and the UE may select transmission resource(s) from among remaining resources excluding resources in which related reception sensitivity is greater than or equal to a predetermined reference value. Herein, based on an embodiment of the present disclosure, when the first resource set to which the first type beam is applied and the second resource set to which the second type beam is applied exist, the candidate resource set for transmission resource selection may include both resources in the first resource set and resources in the second resource set. Herein, the reference value compared with reception sensitivity for reserved resources may be applied differently for the resources in the first resource set and the resources in the second resource set. For example, if the first type beam is an omni-directional beam, since a beam gain may be small, the reference value may be configured to be high. For example, if the second type beam is a directional beam, since a beam gain may be large, the reference value may be configured to be low. Based on the proposed scheme of the present disclosure, by configuring a reference value for resource selection for each beam type, there is an advantage that resource selection compensating for a difference due to a beam gain is possible.

[Proposed Scheme #01-10] may be applied in combination with other proposed scheme(s) as long as the proposed operations do not conflict.

[Proposed Scheme #01-11] When performing communication between a first UE and a second UE, when a first resource set to which a first type beam is applied and/or a second resource set to which a second type beam is applied are pre-agreed/configured between the UEs, the UE may define a candidate resource set for transmission resource selection with resources in the first resource set and the second resource set, and the UE may exclude some resources from the candidate resource set according to condition(s). In this case, if a ratio of remaining resources is less than or equal to a certain ratio, the UE may recover excluded resources. Upon recovery, a specific beam type resource may be prioritized. Herein, for example, the first type beam may refer to a common beam whose directionality is not specified or a beam usable when not performing beam pairing-based communication. Herein, for example, the second type beam may refer to a dedicated beam whose directionality is specified or a beam usable when performing beam pairing-based communication. Herein, for example, the prioritized specific beam type may be the first type beam or the second type beam.

For example, when performing sidelink-based communication between the first UE and the second UE in a next-generation communication system based on an embodiment of the present disclosure, the UE may perform resource selection based on channel sensing. For example, the UE may define a candidate resource set for transmission resource selection, and the UE may configure a sensing resource set preceding the candidate resource set. The UE may identify reserved resources by detecting control signals (e.g., SCI) transmitted by other UEs in the sensing resource set, and the UE may measure reception sensitivity (e.g., reference signals received power (RSRP)) by utilizing reference signals in the sensing resource set. In addition, the UE may predict reception sensitivity due to reserved resources with the measured reception sensitivity, and the UE may select transmission resource(s) from among remaining resources excluding resources in which related reception sensitivity is greater than or equal to a predetermined reference value. Herein, if a ratio of remaining resources is less than or equal to a certain ratio, the UE may recover excluded resources. Herein, if resources for which beam types are distinguished exist as in an embodiment of the present disclosure, the UE may prioritize recovery of a specific beam type resource. For example, if the first type beam is an omni-directional beam, an interference magnitude from another UE may be measured excessively for resources in the first resource set to which the first type beam is applied. For example, if a receiving UE receives with a directional beam, a signal introduced from remaining directions excluding the corresponding direction may not act as interference. Therefore, when the UE recovers excluded resources in a resource selection process, the UE may prioritize and recover a resource corresponding to the first type beam over a resource corresponding to the second type beam. Based on the proposed scheme of the present disclosure, there is an advantage that a resource which can be expected to have less interference can be preferentially incorporated into candidate resources.

[Proposed Scheme #01-11] may be applied in combination with other proposed scheme(s) as long as the proposed operations do not conflict.

[Proposed Scheme #02] When performing communication between a first UE and a second UE, the UE may perform channel sensing for transmission resource selection and/or allocation from a second resource pool in a first resource pool. Herein, for example, the first resource pool and the second resource pool may be composed of resources distinguished from each other. For example, time-axis and/or frequency-axis resources may be distinguished. For example, a bandwidth part (BWP) and/or a carrier may be distinguished.

For example, when performing sidelink-based communication between the first UE and the second UE in a next-generation communication system based on an embodiment of the present disclosure, a first resource pool and a second resource pool which are distinguished from each other may be utilized. Herein, a resource pool may refer to a set of resources available for sidelink-based communication. For example, the resource pool may include available slot information and available resource block (RB) information in a sidelink bandwidth part (BWP). Herein, the UE may be configured with one or more resource pools for sidelink communication. For example, the UE may be configured with the first resource pool and the second resource pool. Herein, the first resource pool may be a resource pool not utilizing a directional beam, and the second resource pool may be a resource pool utilizing a directional beam. For example, the first resource pool may be defined in frequency range 1 (FR1), and the second resource pool may be defined in FR2. Herein, when the UE performs channel sensing for transmission resource selection and/or allocation from the second resource pool, the corresponding channel sensing may be performed in the first resource pool. For example, channel sensing may be performed by assuming an omni-directional reception beam in the first resource pool, and based on the corresponding result, candidate transmission resources in the second resource pool may be selected. In the case of the proposed scheme of the present disclosure described above, there is an advantage of solving a channel sensing problem by utilizing a channel sensing result in a resource pool where channel sensing is effective for transmission resource selection in a resource pool where channel sensing is limited.

[Proposed Scheme #02] may be applied in combination with other proposed scheme(s) as long as the proposed operations do not conflict.

[Proposed Scheme #03] When performing communication between a first UE and a second UE, repetition transmission may be performed for a control signal and/or data transmitted based on a pre-agreed/configured transmission scheme and/or a pre-agreed/configured transmission resource, and the UE may utilize reception results for the repetition transmission for channel sensing by aggregating the reception results for the repeatedly transmitted control signal and/or data. Herein, for example, the pre-agreed/configured transmission scheme may refer to a beam type. For example, in the case of transmitting with an omni-directional beam, repetition transmission may be performed to compensate for a small antenna gain, and in the case of transmitting with a directional beam, repetition transmission may not be performed.

For example, when performing sidelink-based communication between the first UE and the second UE in a next-generation communication system based on an embodiment of the present disclosure, resource selection based on a sensing result may be performed in sidelink-based communication. For example, the UE may define a candidate resource set for resource reservation and/or allocation, and the UE may configure a sensing resource set preceding the candidate resource set. The UE may identify reserved resources by detecting control signals (e.g., SCI) transmitted by other UEs in the sensing resource set, and the UE may measure reception sensitivity (e.g., reference signals received power (RSRP)) by utilizing reference signals in the sensing resource set. In addition, the UE may predict reception sensitivity due to reserved resources with the measured reception sensitivity, and the UE may select transmission resource(s) from among remaining resources excluding resources in which related reception sensitivity is greater than or equal to a predetermined reference value. Herein, a control signal and/or data may be repeatedly transmitted by using a specific transmission scheme and/or a specific transmission resource. For example, when performing sidelink-based communication in FR2, a control signal and/or data transmitted with an omni-directional beam may be repeatedly transmitted to compensate for a small antenna gain, and a control signal and/or data transmitted with a directional beam may not be repeatedly transmitted. Herein, sensing for a repeatedly transmitted resource may be reflected by aggregating reception results for repetition transmission. For example, detection for a control signal and/or RSRP measurement may be performed after combining reception signals for repetition transmission. Herein, phases for reception signals may be compensated through a channel estimation process and then repeated reception signals may be combined. In the case of the proposed scheme of the present disclosure described above, there is an advantage that a channel sensing result reflecting a repetition transmission effect can be expected for a repeatedly transmitted resource. For example, when detecting a control signal per slot in an existing manner for a repeatedly transmitted resource and then utilizing it for channel sensing, there is a limitation that a noise mitigation gain, etc., according to repetition transmission cannot be fully enjoyed.

[Proposed Scheme #03] may be applied in combination with other proposed scheme(s) as long as the proposed operations do not conflict.

In the embodiment of the present disclosure, spatial setting information for sidelink transmission may be changed/managed/configured/indicated differently or independently for each cast type, and/or for each unicast session, and/or for each receiver for sidelink transmission, and/or for each SL channel type, and/or for each (transmission and/or reception) resource pool, and/or for each mobility related information (e.g., speed, velocity, direction, acceleration, position, height, etc.) of a UE, and/or for each transmission priority value, and/or for each reception priority value, and/or for each SL transmission for which SL HARQ-ACK feedback is enabled/disabled, and/or for each SL HARQ-ACK feedback option, and/or for each QoS parameter, and/or for each (remaining) packet delay budget (PDB), and/or for each HARQ process, and/or for each beam process, and/or for each source ID, and/or for each destination ID, and/or for each transport block (TB).

Various schemes of the present disclosure may be applied differently for each unicast session (group), and/or for each cast type, and/or for each transmission priority value, and/or for each reception priority value, and/or for each SL transmission for which SL HARQ-ACK feedback is enabled/disabled, and/or for each SL HARQ-ACK feedback option, and/or for each QoS parameter, and/or for each (remaining) PDB, and/or for each congestion control level, and/or for each (transmission and/or reception) resource pool, and/or for each mobility related information (e.g., speed, velocity, direction, acceleration, position, height, etc.) of a UE, and/or for each sidelink transmission or reception, and/or for each HARQ process, and/or for each beam process, and/or for each source ID, and/or for each destination ID, and/or for each TB. For example, in the embodiment of the present disclosure, a unit of (pre)configuration may be configured in a form of the different combination. For example, in the embodiment of the present disclosure, parameter indication and management through a PSCCH and/or a PSSCH may be performed in units of the form of the different combination.

In the embodiment of the present disclosure, a spatial setting, and/or transmission configuration indication (TCI) information, and/or quasi-co-location (QCL) information, and/or a beam, etc. may refer to each other, and/or may be replaced with or interpreted as beam related information, a beam direction, a spatial domain transmission or reception filter, etc.

In the embodiment of the present disclosure, that spatial setting information for transmission is the same may mean that a spatial domain TX filter of a UE is the same for different two transmission signals. In the embodiment of the present disclosure, that spatial setting information for reception is the same may be a relationship in which different two reception signals are in a QCL 'TypeD' relationship and/or use the same spatial RX parameter.

In the embodiment of the present disclosure, (pre)configuration may mean pre-configuration (based on signaling from a server or upon product shipment), configuration from a base station, configuration through PC5-RRC between UEs, etc.

Various schemes of the present disclosure may be applied differently for each SL channel. Various schemes of the present disclosure may be applied differently according to a type of information included in a SL channel.

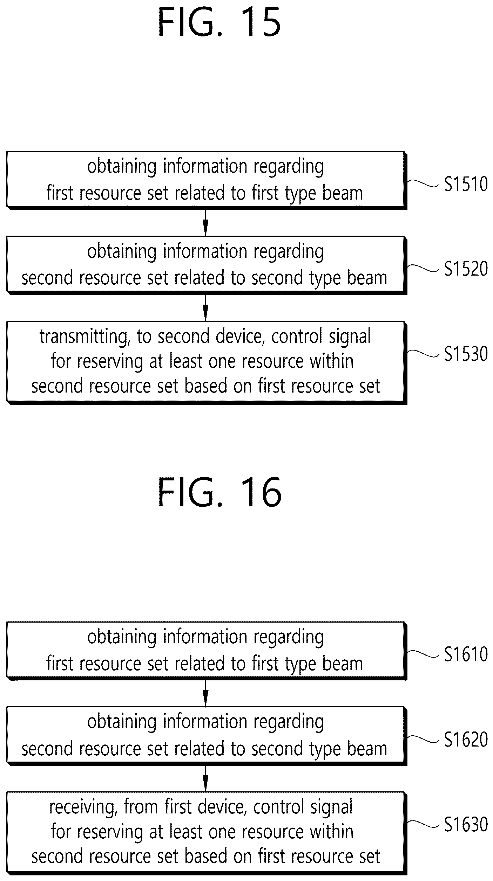

FIG. 15 shows a method for a first device to perform wireless communication, based on an embodiment of the present disclosure. The embodiment of FIG. 15 may be combined with various embodiments of the present disclosure.

Referring to FIG. 15, in step S1510, the first device may obtain information regarding a first resource set related to a first type beam. In step S1520, the first device may obtain information regarding a second resource set related to a second type beam. In step S1530, the first device may transmit, to a second device, a control signal for reserving at least one resource within the second resource set based on the first resource set. For example, the first type beam may include a non-directional beam, and the second type beam may include a directional beam.

For example, the first device may be allowed to transmit the control signal for reserving the at least one resource within the second resource set based on the first resource set.

For example, the first device may not be allowed to transmit a control signal for reserving at least one resource within the first resource set based on the second resource set.

For example, the control signal for reserving the at least one resource within the second resource set may include beam identifier information related to the at least one resource within the second resource set.

For example, the at least one resource within the second resource set may be reserved for beam measurement by the second device.

For example, a result of the beam measurement measured based on the at least one resource within the second resource set may be received from the second device based on the first type beam related to the first resource set.

For example, the at least one resource within the second resource set may be reserved for transmission by the first device.

For example, the at least one resource within the second resource set is selected based on sensing for the first resource set.

For example, the at least one resource within the second resource set may be selected based on sensing for the second resource set, and the sensing may be performed for a receive beam direction related to a beam direction for transmission on the at least one resource.

For example, a first candidate resource set for resource reservation or resource selection within the first resource set and a second candidate resource set for resource reservation or resource selection within the second resource set may be independently configured. For example, a first threshold used for resource exclusion in the first candidate resource set may be independently configured from a second threshold used for resource exclusion in the second candidate resource set.

For example, a first preferred resource set or a first non-preferred resource set within the first resource set and a second preferred resource set or a second non-preferred resource set within the second resource set may be independently configured.

For example, based on a ratio of remaining candidate resources to total candidate resources being less than or equal to a threshold after performing resource exclusion based on sensing, a candidate resource within the first resource set may be preferentially included in the remaining candidate resources over a candidate resource within the second resource set.

For example, resource reservation or resource selection within the first resource set or the second resource set may be performed based on a sum of sensing results for repeated transmissions.

For example, repeated transmissions based on the first resource set may be allowed, and repeated transmissions based on the second resource set may not be allowed.

The proposed method can be applied to devices based on various embodiments of the present disclosure. First, the processor 102 of the first device 100 may obtain information regarding a first resource set related to a first type beam. In addition, the processor 102 of the first device 100 may obtain information regarding a second resource set related to a second type beam. In addition, the processor 102 of the first device 100 may control the transceiver 106 to transmit, to a second device, a control signal for reserving at least one resource within the second resource set based on the first resource set. For example, the first type beam may include a non-directional beam, and the second type beam may include a directional beam.

Based on an embodiment of the present disclosure, a first device adapted to perform wireless communication may be provided. For example, the first device may comprise: at least one transceiver; at least one processor; and at least one memory connected to the at least one processor and storing instructions. For example, the instructions, based on being executed by the at least one processor, may cause the first device to perform operations comprising: obtaining information regarding a first resource set related to a first type beam; obtaining information regarding a second resource set related to a second type beam; and transmitting, to a second device, a control signal for reserving at least one resource within the second resource set based on the first resource set. For example, the first type beam may include a non-directional beam, and the second type beam may include a directional beam.

Based on an embodiment of the present disclosure, a processing device adapted to control a first device may be provided. For example, the processing device may comprise: at least one processor; and at least one memory connected to the at least one processor and storing instructions. For example, the instructions, based on being executed by the at least one processor, may cause the first device to perform operations comprising: obtaining information regarding a first resource set related to a first type beam; obtaining information regarding a second resource set related to a second type beam; and transmitting, to a second device, a control signal for reserving at least one resource within the second resource set based on the first resource set. For example, the first type beam may include a non-directional beam, and the second type beam may include a directional beam.

Based on an embodiment of the present disclosure, a non-transitory computer-readable storage medium storing instructions may be provided. For example, the instructions, when executed, may cause a first device to perform operations comprising: obtaining information regarding a first resource set related to a first type beam; obtaining information regarding a second resource set related to a second type beam; and transmitting, to a second device, a control signal for reserving at least one resource within the second resource set based on the first resource set. For example, the first type beam may include a non-directional beam, and the second type beam may include a directional beam.

FIG. 16 shows a method for a second device to perform wireless communication, based on an embodiment of the present disclosure. The embodiment of FIG. 16 may be combined with various embodiments of the present disclosure.

Referring to FIG. 16, in step S1610, the second device may obtain information regarding a first resource set related to a first type beam. In step S1620, the second device may obtain information regarding a second resource set related to a second type beam. In step S1630, the second device may receive, from a first device, a control signal for reserving at least one resource within the second resource set based on the first resource set. For example, the first type beam may include a non-directional beam, and the second type beam may include a directional beam.

For example, a control signal for reserving at least one resource within the first resource set may not be received based on the second resource set.

For example, the control signal for reserving the at least one resource within the second resource set may include beam identifier information related to the at least one resource within the second resource set.

For example, the at least one resource within the second resource set may be reserved for beam measurement by the second device.

A result of the beam measurement measured based on the at least one resource within the second resource set may be transmitted to the first device based on the first type beam related to the first resource set.

For example, the at least one resource within the second resource set may be reserved for transmission by the first device.

For example, the at least one resource within the second resource set is selected based on sensing for the first resource set.

For example, the at least one resource within the second resource set may be selected based on sensing for the second resource set, and the sensing may be performed for a receive beam direction related to a beam direction for transmission on the at least one resource.

For example, a first candidate resource set for resource reservation or resource selection within the first resource set and a second candidate resource set for resource reservation or resource selection within the second resource set may be independently configured. For example, a first threshold used for resource exclusion in the first candidate resource set may be independently configured from a second threshold used for resource exclusion in the second candidate resource set.

For example, a first preferred resource set or a first non-preferred resource set within the first resource set and a second preferred resource set or a second non-preferred resource set within the second resource set may be independently configured.

For example, based on a ratio of remaining candidate resources to total candidate resources being less than or equal to a threshold after performing resource exclusion based on sensing, a candidate resource within the first resource set may be preferentially included in the remaining candidate resources over a candidate resource within the second resource set.

For example, resource reservation or resource selection within the first resource set or the second resource set may be performed based on a sum of sensing results for repeated transmissions.

For example, repeated transmissions based on the first resource set may be allowed, and repeated transmissions based on the second resource set may not be allowed.

The proposed method can be applied to devices based on various embodiments of the present disclosure. First, the processor 202 of the second device 200 may obtain information regarding a first resource set related to a first type beam. In addition, the processor 202 of the second device 200 may obtain information regarding a second resource set related to a second type beam. In addition, the processor 202 of the second device 200 may control the transceiver 206 to receive, from a first device, a control signal for reserving at least one resource within the second resource set based on the first resource set. For example, the first type beam may include a non-directional beam, and the second type beam may include a directional beam.

Based on an embodiment of the present disclosure, a second device adapted to perform wireless communication may be provided. For example, the second device may comprise: at least one transceiver; at least one processor; and at least one memory connected to the at least one processor and storing instructions. For example, the instructions, based on being executed by the at least one processor, may cause the second device to perform operations comprising: obtaining information regarding a first resource set related to a first type beam; obtaining information regarding a second resource set related to a second type beam; and receiving, from a first device, a control signal for reserving at least one resource within the second resource set based on the first resource set. For example, the first type beam may include a non-directional beam, and the second type beam may include a directional beam.

Based on an embodiment of the present disclosure, a processing device adapted to control a second device may be provided. For example, the processing device may comprise: at least one processor; and at least one memory connected to the at least one processor and storing instructions. For example, the instructions, based on being executed by the at least one processor, may cause the second device to perform operations comprising: obtaining information regarding a first resource set related to a first type beam; obtaining information regarding a second resource set related to a second type beam; and receiving, from a first device, a control signal for reserving at least one resource within the second resource set based on the first resource set. For example, the first type beam may include a non-directional beam, and the second type beam may include a directional beam.

Based on an embodiment of the present disclosure, a non-transitory computer-readable storage medium storing instructions may be provided. For example, the instructions, when executed, may cause a second device to perform operations comprising: obtaining information regarding a first resource set related to a first type beam; obtaining information regarding a second resource set related to a second type beam; and receiving, from a first device, a control signal for reserving at least one resource within the second resource set based on the first resource set. For example, the first type beam may include a non-directional beam, and the second type beam may include a directional beam.

Various embodiments of the present disclosure may be combined with each other.

Hereinafter, device(s) to which various embodiments of the present disclosure can be applied will be described.

The various descriptions, functions, procedures, proposals, methods, and/or operational flowcharts of the present disclosure described in this document may be applied to, without being limited to, a variety of fields requiring wireless communication/connection (e.g., 5G) between devices.

Hereinafter, a description will be given in more detail with reference to the drawings. In the following drawings/description, the same reference symbols may denote the same or corresponding hardware blocks, software blocks, or functional blocks unless described otherwise.

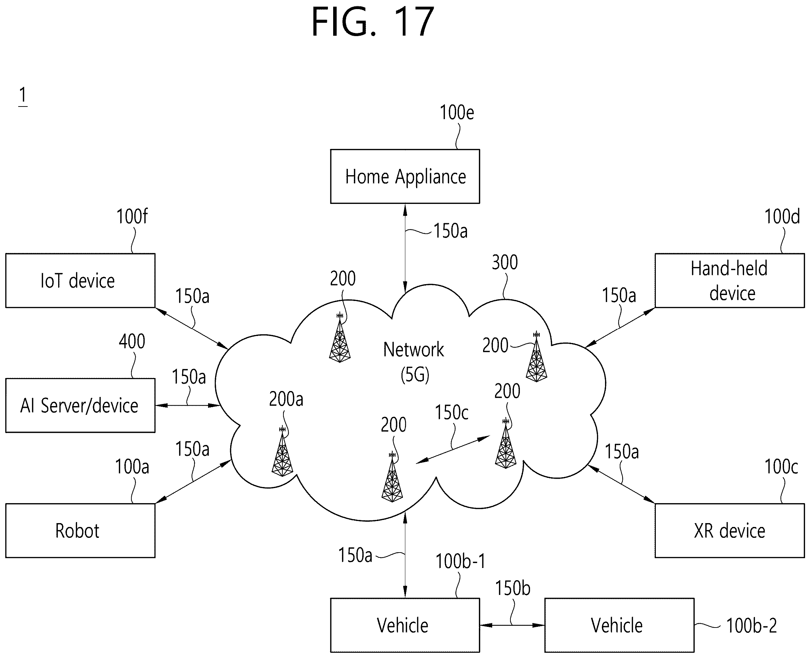

FIG. 17 shows a communication system 1, based on an embodiment of the present disclosure. The embodiment of FIG. 17 may be combined with various embodiments of the present disclosure.

Referring to FIG. 17, a communication system 1 to which various embodiments of the present disclosure are applied includes wireless devices, Base Stations (BSs), and a network. Herein, the wireless devices represent devices performing communication using Radio Access Technology (RAT) (e.g., 5G New RAT (NR)) or Long-Term Evolution (LTE)) and may be referred to as communication/radio/5G devices. The wireless devices may include, without being limited to, a robot 100a, vehicles 100b-1 and 100b-2, an extended Reality (XR) device 100c, a hand-held device 100d, a home appliance 100e, an Internet of Things (IoT) device 100f, and an Artificial Intelligence (AI) device/server 400. For example, the vehicles may include a vehicle having a wireless communication function, an autonomous vehicle, and a vehicle capable of performing communication between vehicles. Herein, the vehicles may include an Unmanned Aerial Vehicle (UAV) (e.g., a drone) and/or an Aerial Vehicle (AV) (e.g., Advanced Air Mobility (AAM)). The XR device may include an Augmented Reality (AR)/Virtual Reality (VR)/Mixed Reality (MR) device and may be implemented in the form of a Head-Mounted Device (HMD), a Head-Up Display (HUD) mounted in a vehicle, a television, a smartphone, a computer, a wearable device, a home appliance device, a digital signage, a vehicle, a robot, etc. The hand-held device may include a smartphone, a smartpad, a wearable device (e.g., a smartwatch or a smartglasses), and a computer (e.g., a notebook). The home appliance may include a TV, a refrigerator, and a washing machine. The IoT device may include a sensor and a smartmeter. For example, the BSs and the network may be implemented as wireless devices and a specific wireless device 200a may operate as a BS/network node with respect to other wireless devices.

Here, wireless communication technology implemented in wireless devices 100a to 100f of the present disclosure may include Narrowband Internet of Things for low-power communication in addition to LTE, NR, and 6G. In this case, for example, NB-IoT technology may be an example of Low Power Wide Area Network (LPWAN) technology and may be implemented as standards such as LTE Cat NB1, and/or LTE Cat NB2, and is not limited to the name described above. Additionally or alternatively, the wireless communication technology implemented in the wireless devices 100a to 100f of the present disclosure may perform communication based on LTE-M technology. In this case, as an example, the LTE-M technology may be an example of the LPWAN and may be called by various names including enhanced Machine Type Communication (eMTC), and the like. For example, the LTE-M technology may be implemented as at least any one of various standards such as 1) LTE CAT 0, 2) LTE Cat M1, 3) LTE Cat M2, 4) LTE non-Bandwidth Limited (non-BL), 5) LTE-MTC, 6) LTE Machine Type Communication, and/or 7) LTE M, and is not limited to the name described above. Additionally or alternatively, the wireless communication technology implemented in the wireless devices 100a to 100f of the present disclosure may include at least one of Bluetooth, Low Power Wide Area Network (LPWAN), and ZigBee considering the low-power communication, and is not limited to the name described above. As an example, the ZigBee technology may generate personal area networks (PAN) related to small/low-power digital communication based on various standards including IEEE 802.15.4, and the like, and may be called by various names.

The wireless devices 100a to 100f may be connected to the network 300 via the BSs 200. An AI technology may be applied to the wireless devices 100a to 100f and the wireless devices 100a to 100f may be connected to the AI server 400 via the network 300. The network 300 may be configured using a 3G network, a 4G (e.g., LTE) network, or a 5G (e.g., NR) network. Although the wireless devices 100a to 100f may communicate with each other through the BSs 200/network 300, the wireless devices 100a to 100f may perform direct communication (e.g., sidelink communication) with each other without passing through the BSs/network. For example, the vehicles 100b-1 and 100b-2 may perform direct communication (e.g. Vehicle-to-Vehicle (V2V)/Vehicle-to-everything (V2X) communication). The IoT device (e.g., a sensor) may perform direct communication with other IoT devices (e.g., sensors) or other wireless devices 100a to 100f.

Wireless communication/connections 150a, 150b, or 150c may be established between the wireless devices 100a to 100f/BS 200, or BS 200/BS 200. Herein, the wireless communication/connections may be established through various RATs (e.g., 5G NR) such as uplink/downlink communication 150a, sidelink communication 150b (or, D2D communication), or inter BS communication (e.g. relay, Integrated Access Backhaul (IAB)). The wireless devices and the BSs/the wireless devices may transmit/receive radio signals to/from each other through the wireless communication/connections 150a and 150b. For example, the wireless communication/connections 150a and 150b may transmit/receive signals through various physical channels. To this end, at least a part of various configuration information configuring processes, various signal processing processes (e.g., channel encoding/decoding, modulation/demodulation, and resource mapping/demapping), and resource allocating processes, for transmitting/receiving radio signals, may be performed based on the various proposals of the present disclosure.

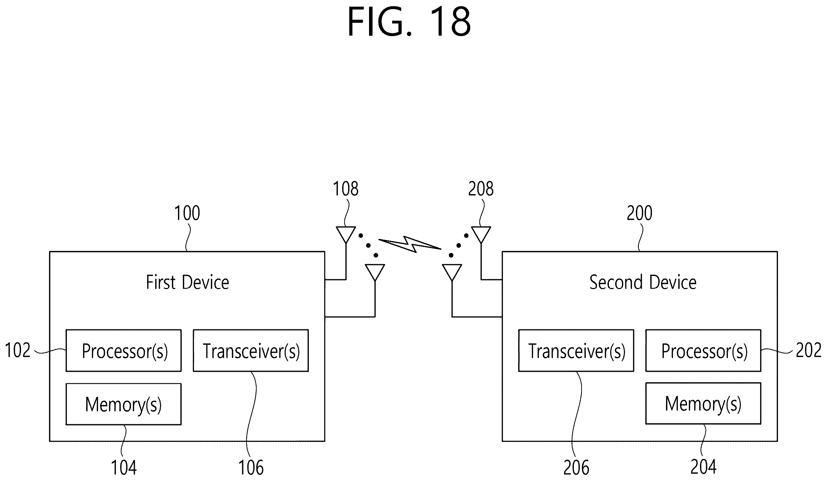

FIG. 18 shows wireless devices, based on an embodiment of the present disclosure. The embodiment of FIG. 18 may be combined with various embodiments of the present disclosure.

Referring to FIG. 18, a first wireless device 100 and a second wireless device 200 may transmit radio signals through a variety of RATs (e.g., LTE and NR). Herein, {the first wireless device 100 and the second wireless device 200} may correspond to {the wireless device 100x and the BS 200} and/or {the wireless device 100x and the wireless device 100x} of FIG. 17.

The first wireless device 100 may include one or more processors 102 and one or more memories 104 and additionally further include one or more transceivers 106 and/or one or more antennas 108. The processor(s) 102 may control the memory(s) 104 and/or the transceiver(s) 106 and may be configured to implement the descriptions, functions, procedures, proposals, methods, and/or operational flowcharts disclosed in this document. For example, the processor(s) 102 may process information within the memory(s) 104 to generate first information/signals and then transmit radio signals including the first information/signals through the transceiver(s) 106. The processor(s) 102 may receive radio signals including second information/signals through the transceiver 106 and then store information obtained by processing the second information/signals in the memory(s) 104. The memory(s) 104 may be connected to the processor(s) 102 and may store a variety of information related to operations of the processor(s) 102. For example, the memory(s) 104 may store software code including commands for performing a part or the entirety of processes controlled by the processor(s) 102 or for performing the descriptions, functions, procedures, proposals, methods, and/or operational flowcharts disclosed in this document. Herein, the processor(s) 102 and the memory(s) 104 may be a part of a communication modem/circuit/chip designed to implement RAT (e.g., LTE or NR). The transceiver(s) 106 may be connected to the processor(s) 102 and transmit and/or receive radio signals through one or more antennas 108. Each of the transceiver(s) 106 may include a transmitter and/or a receiver. The transceiver(s) 106 may be interchangeably used with Radio Frequency (RF) unit(s). In the present disclosure, the wireless device may represent a communication modem/circuit/chip.

The second wireless device 200 may include one or more processors 202 and one or more memories 204 and additionally further include one or more transceivers 206 and/or one or more antennas 208. The processor(s) 202 may control the memory(s) 204 and/or the transceiver(s) 206 and may be configured to implement the descriptions, functions, procedures, proposals, methods, and/or operational flowcharts disclosed in this document. For example, the processor(s) 202 may process information within the memory(s) 204 to generate third information/signals and then transmit radio signals including the third information/signals through the transceiver(s) 206. The processor(s) 202 may receive radio signals including fourth information/signals through the transceiver(s) 106 and then store information obtained by processing the fourth information/signals in the memory(s) 204. The memory(s) 204 may be connected to the processor(s) 202 and may store a variety of information related to operations of the processor(s) 202. For example, the memory(s) 204 may store software code including commands for performing a part or the entirety of processes controlled by the processor(s) 202 or for performing the descriptions, functions, procedures, proposals, methods, and/or operational flowcharts disclosed in this document. Herein, the processor(s) 202 and the memory(s) 204 may be a part of a communication modem/circuit/chip designed to implement RAT (e.g., LTE or NR). The transceiver(s) 206 may be connected to the processor(s) 202 and transmit and/or receive radio signals through one or more antennas 208. Each of the transceiver(s) 206 may include a transmitter and/or a receiver. The transceiver(s) 206 may be interchangeably used with RF unit(s). In the present disclosure, the wireless device may represent a communication modem/circuit/chip.

Hereinafter, hardware elements of the wireless devices 100 and 200 will be described more specifically. One or more protocol layers may be implemented by, without being limited to, one or more processors 102 and 202. For example, the one or more processors 102 and 202 may implement one or more layers (e.g., functional layers such as PHY, MAC, RLC, PDCP, RRC, and SDAP). The one or more processors 102 and 202 may generate one or more Protocol Data Units (PDUs) and/or one or more Service Data Unit (SDUs) according to the descriptions, functions, procedures, proposals, methods, and/or operational flowcharts disclosed in this document. The one or more processors 102 and 202 may generate messages, control information, data, or information according to the descriptions, functions, procedures, proposals, methods, and/or operational flowcharts disclosed in this document. The one or more processors 102 and 202 may generate signals (e.g., baseband signals) including PDUs, SDUs, messages, control information, data, or information according to the descriptions, functions, procedures, proposals, methods, and/or operational flowcharts disclosed in this document and provide the generated signals to the one or more transceivers 106 and 206. The one or more processors 102 and 202 may receive the signals (e.g., baseband signals) from the one or more transceivers 106 and 206 and acquire the PDUs, SDUs, messages, control information, data, or information according to the descriptions, functions, procedures, proposals, methods, and/or operational flowcharts disclosed in this document.

The one or more processors 102 and 202 may be referred to as controllers, microcontrollers, microprocessors, or microcomputers. The one or more processors 102 and 202 may be implemented by hardware, firmware, software, or a combination thereof. As an example, one or more Application Specific Integrated Circuits (ASICs), one or more Digital Signal Processors (DSPs), one or more Digital Signal Processing Devices (DSPDs), one or more Programmable Logic Devices (PLDs), or one or more Field Programmable Gate Arrays (FPGAs) may be included in the one or more processors 102 and 202. The descriptions, functions, procedures, proposals, methods, and/or operational flowcharts disclosed in this document may be implemented using firmware or software and the firmware or software may be configured to include the modules, procedures, or functions. Firmware or software configured to perform the descriptions, functions, procedures, proposals, methods, and/or operational flowcharts disclosed in this document may be included in the one or more processors 102 and 202 or stored in the one or more memories 104 and 204 so as to be driven by the one or more processors 102 and 202. The descriptions, functions, procedures, proposals, methods, and/or operational flowcharts disclosed in this document may be implemented using firmware or software in the form of code, commands, and/or a set of commands.

The one or more memories 104 and 204 may be connected to the one or more processors 102 and 202 and store various types of data, signals, messages, information, programs, code, instructions, and/or commands. The one or more memories 104 and 204 may be configured by Read-Only Memories (ROMs), Random Access Memories (RAMs), Electrically Erasable Programmable Read-Only Memories (EPROMs), flash memories, hard drives, registers, cache memories, computer-readable storage media, and/or combinations thereof. The one or more memories 104 and 204 may be located at the interior and/or exterior of the one or more processors 102 and 202. The one or more memories 104 and 204 may be connected to the one or more processors 102 and 202 through various technologies such as wired or wireless connection.

The one or more transceivers 106 and 206 may transmit user data, control information, and/or radio signals/channels, mentioned in the methods and/or operational flowcharts of this document, to one or more other devices. The one or more transceivers 106 and 206 may receive user data, control information, and/or radio signals/channels, mentioned in the descriptions, functions, procedures, proposals, methods, and/or operational flowcharts disclosed in this document, from one or more other devices. For example, the one or more transceivers 106 and 206 may be connected to the one or more processors 102 and 202 and transmit and receive radio signals. For example, the one or more processors 102 and 202 may perform control so that the one or more transceivers 106 and 206 may transmit user data, control information, or radio signals to one or more other devices. The one or more processors 102 and 202 may perform control so that the one or more transceivers 106 and 206 may receive user data, control information, or radio signals from one or more other devices. The one or more transceivers 106 and 206 may be connected to the one or more antennas 108 and 208 and the one or more transceivers 106 and 206 may be configured to transmit and receive user data, control information, and/or radio signals/channels, mentioned in the descriptions, functions, procedures, proposals, methods, and/or operational flowcharts disclosed in this document, through the one or more antennas 108 and 208. In this document, the one or more antennas may be a plurality of physical antennas or a plurality of logical antennas (e.g., antenna ports). The one or more transceivers 106 and 206 may convert received radio signals/channels etc. from RF band signals into baseband signals in order to process received user data, control information, radio signals/channels, etc. using the one or more processors 102 and 202. The one or more transceivers 106 and 206 may convert the user data, control information, radio signals/channels, etc. processed using the one or more processors 102 and 202 from the base band signals into the RF band signals. To this end, the one or more transceivers 106 and 206 may include (analog) oscillators and/or filters.

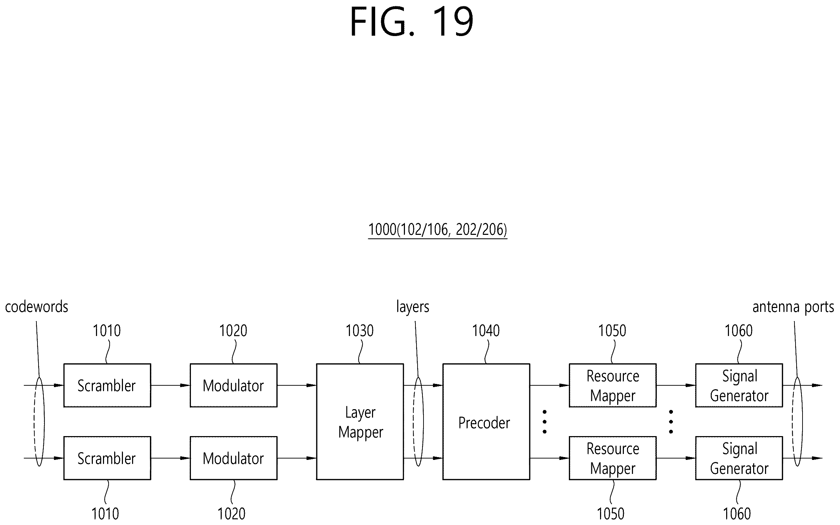

FIG. 19 shows a signal process circuit for a transmission signal, based on an embodiment of the present disclosure. The embodiment of FIG. 19 may be combined with various embodiments of the present disclosure.

Referring to FIG. 19, a signal processing circuit 1000 may include scramblers 1010, modulators 1020, a layer mapper 1030, a precoder 1040, resource mappers 1050, and signal generators 1060. An operation/function of FIG. 19 may be performed, without being limited to, the processors 102 and 202 and/or the transceivers 106 and 206 of FIG. 18. Hardware elements of FIG. 19 may be implemented by the processors 102 and 202 and/or the transceivers 106 and 206 of FIG. 18. For example, blocks 1010 to 1060 may be implemented by the processors 102 and 202 of FIG. 18. Alternatively, the blocks 1010 to 1050 may be implemented by the processors 102 and 202 of FIG. 18 and the block 1060 may be implemented by the transceivers 106 and 206 of FIG. 18.

Codewords may be converted into radio signals via the signal processing circuit 1000 of FIG. 19. Herein, the codewords are encoded bit sequences of information blocks. The information blocks may include transport blocks (e.g., a UL-SCH transport block, a DL-SCH transport block). The radio signals may be transmitted through various physical channels (e.g., a PUSCH and a PDSCH).

Specifically, the codewords may be converted into scrambled bit sequences by the scramblers 1010. Scramble sequences used for scrambling may be generated based on an initialization value, and the initialization value may include ID information of a wireless device. The scrambled bit sequences may be modulated to modulation symbol sequences by the modulators 1020. A modulation scheme may include pi/2-Binary Phase Shift Keying (pi/2-BPSK), m-Phase Shift Keying (m-PSK), and m-Quadrature Amplitude Modulation (m-QAM). Complex modulation symbol sequences may be mapped to one or more transport layers by the layer mapper 1030. Modulation symbols of each transport layer may be mapped (precoded) to corresponding antenna port(s) by the precoder 1040. Outputs z of the precoder 1040 may be obtained by multiplying outputs y of the layer mapper 1030 by an N*M precoding matrix W. Herein, N is the number of antenna ports and M is the number of transport layers. The precoder 1040 may perform precoding after performing transform precoding (e.g., DFT) for complex modulation symbols. Alternatively, the precoder 1040 may perform precoding without performing transform precoding.

The resource mappers 1050 may map modulation symbols of each antenna port to time-frequency resources. The time-frequency resources may include a plurality of symbols (e.g., a CP-OFDMA symbols and DFT-s-OFDMA symbols) in the time domain and a plurality of subcarriers in the frequency domain. The signal generators 1060 may generate radio signals from the mapped modulation symbols and the generated radio signals may be transmitted to other devices through each antenna. For this purpose, the signal generators 1060 may include Inverse Fast Fourier Transform (IFFT) modules, Cyclic Prefix (CP) inserters, Digital-to-Analog Converters (DACs), and frequency up-converters.

Signal processing procedures for a signal received in the wireless device may be configured in a reverse manner of the signal processing procedures 1010 to 1060 of FIG. 19. For example, the wireless devices (e.g., 100 and 200 of FIG. 18) may receive radio signals from the exterior through the antenna ports/transceivers. The received radio signals may be converted into baseband signals through signal restorers. To this end, the signal restorers may include frequency downlink converters, Analog-to-Digital Converters (ADCs), CP remover, and Fast Fourier Transform (FFT) modules. Next, the baseband signals may be restored to codewords through a resource demapping procedure, a postcoding procedure, a demodulation processor, and a descrambling procedure. The codewords may be restored to original information blocks through decoding. Therefore, a signal processing circuit (not illustrated) for a reception signal may include signal restorers, resource demappers, a postcoder, demodulators, descramblers, and decoders.

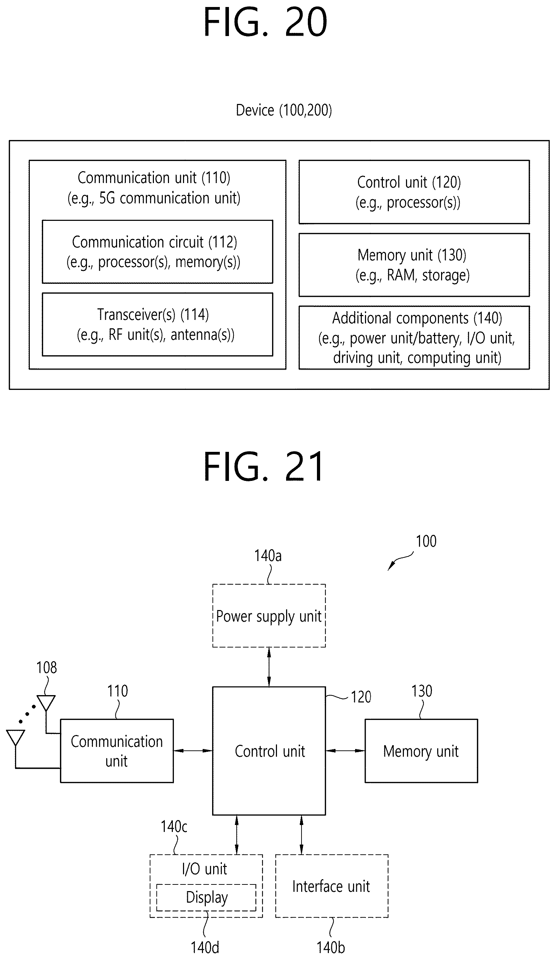

FIG. 20 shows another example of a wireless device, based on an embodiment of the present disclosure. The wireless device may be implemented in various forms according to a use-case/service (refer to FIG. 17). The embodiment of FIG. 20 may be combined with various embodiments of the present disclosure.

Referring to FIG. 20, wireless devices 100 and 200 may correspond to the wireless devices 100 and 200 of FIG. 18 and may be configured by various elements, components, units/portions, and/or modules. For example, each of the wireless devices 100 and 200 may include a communication unit 110, a control unit 120, a memory unit 130, and additional components 140. The communication unit may include a communication circuit 112 and transceiver(s) 114. For example, the communication circuit 112 may include the one or more processors 102 and 202 and/or the one or more memories 104 and 204 of FIG. 18. For example, the transceiver(s) 114 may include the one or more transceivers 106 and 206 and/or the one or more antennas 108 and 208 of FIG. 18. The control unit 120 is electrically connected to the communication unit 110, the memory 130, and the additional components 140 and controls overall operation of the wireless devices. For example, the control unit 120 may control an electric/mechanical operation of the wireless device based on programs/code/commands/information stored in the memory unit 130. The control unit 120 may transmit the information stored in the memory unit 130 to the exterior (e.g., other communication devices) via the communication unit 110 through a wireless/wired interface or store, in the memory unit 130, information received through the wireless/wired interface from the exterior (e.g., other communication devices) via the communication unit 110.

The additional components 140 may be variously configured according to types of wireless devices. For example, the additional components 140 may include at least one of a power unit/battery, input/output (I/O) unit, a driving unit, and a computing unit. The wireless device may be implemented in the form of, without being limited to, the robot (100a of FIG. 17), the vehicles (100b-1 and 100b-2 of FIG. 17), the XR device (100c of FIG. 17), the hand-held device (100d of FIG. 17), the home appliance (100e of FIG. 17), the IoT device (100f of FIG. 17), a digital broadcast terminal, a hologram device, a public safety device, an MTC device, a medicine device, a fintech device (or a finance device), a security device, a climate/environment device, the AI server/device (400 of FIG. 17), the BSs (200 of FIG. 17), a network node, etc. The wireless device may be used in a mobile or fixed place according to a use-example/service.

In FIG. 20, the entirety of the various elements, components, units/portions, and/or modules in the wireless devices 100 and 200 may be connected to each other through a wired interface or at least a part thereof may be wirelessly connected through the communication unit 110. For example, in each of the wireless devices 100 and 200, the control unit 120 and the communication unit 110 may be connected by wire and the control unit 120 and first units (e.g., 130 and 140) may be wirelessly connected through the communication unit 110. Each element, component, unit/portion, and/or module within the wireless devices 100 and 200 may further include one or more elements. For example, the control unit 120 may be configured by a set of one or more processors. As an example, the control unit 120 may be configured by a set of a communication control processor, an application processor, an Electronic Control Unit (ECU), a graphical processing unit, and a memory control processor. As another example, the memory 130 may be configured by a Random Access Memory (RAM), a Dynamic RAM (DRAM), a Read Only Memory (ROM)), a flash memory, a volatile memory, a non-volatile memory, and/or a combination thereof.

Hereinafter, an example of implementing FIG. 20 will be described in detail with reference to the drawings.

FIG. 21 shows a hand-held device, based on an embodiment of the present disclosure. The hand-held device may include a smartphone, a smartpad, a wearable device (e.g., a smartwatch or a smartglasses), or a portable computer (e.g., a notebook). The hand-held device may be referred to as a mobile station (MS), a user terminal (UT), a Mobile Subscriber Station (MSS), a Subscriber Station (SS), an Advanced Mobile Station (AMS), or a Wireless Terminal (WT). The embodiment of FIG. 21 may be combined with various embodiments of the present disclosure.

Referring to FIG. 21, a hand-held device 100 may include an antenna unit 108, a communication unit 110, a control unit 120, a memory unit 130, a power supply unit 140a, an interface unit 140b, and an I/O unit 140c. The antenna unit 108 may be configured as a part of the communication unit 110. Blocks 110 to 130/140a to140c correspond to the blocks 110 to 130/140 of FIG. 20, respectively.

The communication unit 110 may transmit and receive signals (e.g., data and control signals) to and from other wireless devices or BSs. The control unit 120 may perform various operations by controlling constituent elements of the hand-held device 100. The control unit 120 may include an Application Processor (AP). The memory unit 130 may store data/parameters/programs/code/commands needed to drive the hand-held device 100. The memory unit 130 may store input/output data/information. The power supply unit 140a may supply power to the hand-held device 100 and include a wired/wireless charging circuit, a battery, etc. The interface unit 140b may support connection of the hand-held device 100 to other external devices. The interface unit 140b may include various ports (e.g., an audio I/O port and a video I/O port) for connection with external devices. The I/O unit 140c may input or output video information/signals, audio information/signals, data, and/or information input by a user. The I/O unit 140c may include a camera, a microphone, a user input unit, a display unit 140d, a speaker, and/or a haptic module.

As an example, in the case of data communication, the I/O unit 140c may acquire information/signals (e.g., touch, text, voice, images, or video) input by a user and the acquired information/signals may be stored in the memory unit 130. The communication unit 110 may convert the information/signals stored in the memory into radio signals and transmit the converted radio signals to other wireless devices directly or to a BS. The communication unit 110 may receive radio signals from other wireless devices or the BS and then restore the received radio signals into original information/signals. The restored information/signals may be stored in the memory unit 130 and may be output as various types (e.g., text, voice, images, video, or haptic) through the I/O unit 140c.

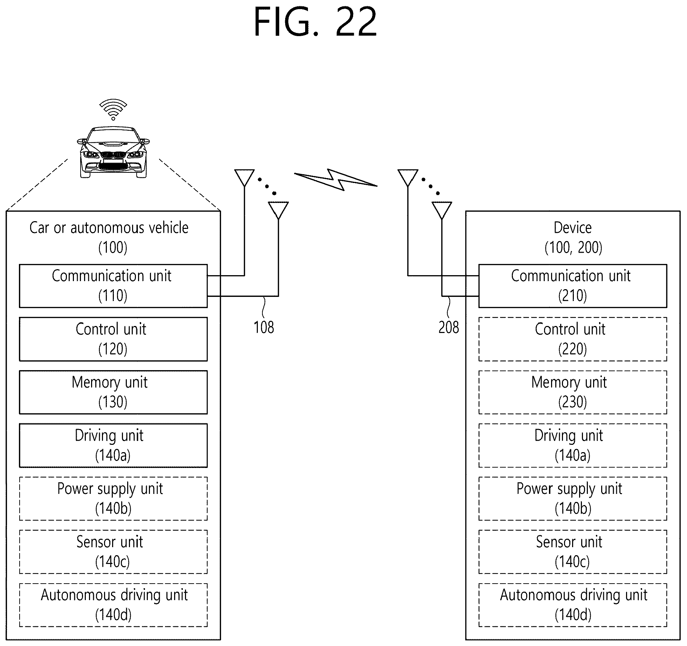

FIG. 22 shows a vehicle or an autonomous vehicle, based on an embodiment of the present disclosure. The vehicle or autonomous vehicle may be implemented by a mobile robot, a car, a train, a manned/unmanned Aerial Vehicle (AV), a ship, etc. The embodiment of FIG. 22 may be combined with various embodiments of the present disclosure.

Referring to FIG. 22, a vehicle or autonomous vehicle 100 may include an antenna unit 108, a communication unit 110, a control unit 120, a driving unit 140a, a power supply unit 140b, a sensor unit 140c, and an autonomous driving unit 140d. The antenna unit 108 may be configured as a part of the communication unit 110. The blocks 110/130/140a to 140d correspond to the blocks 110/130/140 of FIG. 20, respectively.

The communication unit 110 may transmit and receive signals (e.g., data and control signals) to and from external devices such as other vehicles, BSs (e.g., gNBs and road side units), and servers. The control unit 120 may perform various operations by controlling elements of the vehicle or the autonomous vehicle 100. The control unit 120 may include an Electronic Control Unit (ECU). The driving unit 140a may cause the vehicle or the autonomous vehicle 100 to drive on a road. The driving unit 140a may include an engine, a motor, a powertrain, a wheel, a brake, a steering device, etc. The power supply unit 140b may supply power to the vehicle or the autonomous vehicle 100 and include a wired/wireless charging circuit, a battery, etc. The sensor unit 140c may acquire a vehicle state, ambient environment information, user information, etc. The sensor unit 140c may include an Inertial Measurement Unit (IMU) sensor, a collision sensor, a wheel sensor, a speed sensor, a slope sensor, a weight sensor, a heading sensor, a position module, a vehicle forward/backward sensor, a battery sensor, a fuel sensor, a tire sensor, a steering sensor, a temperature sensor, a humidity sensor, an ultrasonic sensor, an illumination sensor, a pedal position sensor, etc. The autonomous driving unit 140d may implement technology for maintaining a lane on which a vehicle is driving, technology for automatically adjusting speed, such as adaptive cruise control, technology for autonomously driving along a determined path, technology for driving by automatically setting a path if a destination is set, and the like.

For example, the communication unit 110 may receive map data, traffic information data, etc. from an external server. The autonomous driving unit 140d may generate an autonomous driving path and a driving plan from the obtained data. The control unit 120 may control the driving unit 140a such that the vehicle or the autonomous vehicle 100 may move along the autonomous driving path according to the driving plan (e.g., speed/direction control). In the middle of autonomous driving, the communication unit 110 may aperiodically/periodically acquire recent traffic information data from the external server and acquire surrounding traffic information data from neighboring vehicles. In the middle of autonomous driving, the sensor unit 140c may obtain a vehicle state and/or surrounding environment information. The autonomous driving unit 140d may update the autonomous driving path and the driving plan based on the newly obtained data/information. The communication unit 110 may transfer information about a vehicle position, the autonomous driving path, and/or the driving plan to the external server. The external server may predict traffic information data using AI technology, etc., based on the information collected from vehicles or autonomous vehicles and provide the predicted traffic information data to the vehicles or the autonomous vehicles.

Claims in the present description can be combined in a various way. For instance, technical features in method claims of the present description can be combined to be implemented or performed in an apparatus, and technical features in apparatus claims can be combined to be implemented or performed in a method. Further, technical features in method claim(s) and apparatus claim(s) can be combined to be implemented or performed in an apparatus. Further, technical features in method claim(s) and apparatus claim(s) can be combined to be implemented or performed in a method.

## Claims

1. A method for performing wireless communication by a first device, the method comprising:
obtaining information regarding a first resource set related to a first type beam;
obtaining information regarding a second resource set related to a second type beam; and
transmitting, to a second device, a control signal for reserving at least one resource within the second resource set based on the first resource set,
wherein the first type beam includes a non-directional beam, and
wherein the second type beam includes a directional beam.

2. The method of claim 1, wherein the first device is allowed to transmit the control signal for reserving the at least one resource within the second resource set based on the first resource set.

3. The method of claim 1, wherein the first device is not allowed to transmit a control signal for reserving at least one resource within the first resource set based on the second resource set.

4. The method of claim 1, wherein the control signal for reserving the at least one resource within the second resource set includes beam identifier information related to the at least one resource within the second resource set.

5. The method of claim 1, wherein the at least one resource within the second resource set is reserved for beam measurement by the second device or transmission by the first device.

6. The method of claim 5, wherein a result of the beam measurement measured based on the at least one resource within the second resource set is received from the second device based on the first type beam related to the first resource set.

7. The method of claim 1, wherein the at least one resource within the second resource set is selected based on sensing for the first resource set.

8. The method of claim 1, wherein the at least one resource within the second resource set is selected based on sensing for the second resource set, and
wherein the sensing is performed for a receive beam direction related to a beam direction for transmission on the at least one resource.

9. The method of claim 1, wherein a first candidate resource set for resource reservation or resource selection within the first resource set and a second candidate resource set for resource reservation or resource selection within the second resource set are independently configured.

10. The method of claim 9, wherein a first threshold used for resource exclusion in the first candidate resource set is independently configured from a second threshold used for resource exclusion in the second candidate resource set.

11. The method of claim 1, wherein a first preferred resource set or a first non-preferred resource set within the first resource set and a second preferred resource set or a second non-preferred resource set within the second resource set are independently configured.

12. The method of claim 1, wherein, based on a ratio of remaining candidate resources to total candidate resources being less than or equal to a threshold after performing resource exclusion based on sensing, a candidate resource within the first resource set is preferentially included in the remaining candidate resources over a candidate resource within the second resource set.

13. The method of claim 1, wherein resource reservation or resource selection within the first resource set or the second resource set is performed based on a sum of sensing results for repeated transmissions.

14. A first device adapted to perform wireless communication, the first device comprising:
at least one transceiver;
at least one processor; and
at least one memory connected to the at least one processor and storing instructions that, based on being executed by the at least one processor, cause the first device to perform operations comprising:
obtaining information regarding a first resource set related to a first type beam;
obtaining information regarding a second resource set related to a second type beam; and
transmitting, to a second device, a control signal for reserving at least one resource within the second resource set based on the first resource set,
wherein the first type beam includes a non-directional beam, and
wherein the second type beam includes a directional beam.

15. A processing device adapted to control a first device, the processing device comprising:
at least one processor; and
at least one memory connected to the at least one processor and storing instructions that, based on being executed by the at least one processor, cause the first device to perform operations comprising:
obtaining information regarding a first resource set related to a first type beam;
obtaining information regarding a second resource set related to a second type beam; and
transmitting, to a second device, a control signal for reserving at least one resource within the second resource set based on the first resource set,
wherein the first type beam includes a non-directional beam, and
wherein the second type beam includes a directional beam.

16. Anon-transitory computer-readable storage medium storing instructions that, when executed, cause a first device to perform operations comprising:
obtaining information regarding a first resource set related to a first type beam;
obtaining information regarding a second resource set related to a second type beam; and
transmitting, to a second device, a control signal for reserving at least one resource within the second resource set based on the first resource set,
wherein the first type beam includes a non-directional beam, and
wherein the second type beam includes a directional beam.

17. A method for performing wireless communication by a second device, the method comprising:
obtaining information regarding a first resource set related to a first type beam;
obtaining information regarding a second resource set related to a second type beam; and
receiving, from a first device, a control signal for reserving at least one resource within the second resource set based on the first resource set,
wherein the first type beam includes a non-directional beam, and
wherein the second type beam includes a directional beam.

18. A second device adapted to perform wireless communication, the second device comprising:
at least one transceiver;
at least one processor; and
at least one memory connected to the at least one processor and storing instructions that, based on being executed by the at least one processor, cause the second device to perform operations comprising:
obtaining information regarding a first resource set related to a first type beam;
obtaining information regarding a second resource set related to a second type beam; and
receiving, from a first device, a control signal for reserving at least one resource within the second resource set based on the first resource set,
wherein the first type beam includes a non-directional beam, and
wherein the second type beam includes a directional beam.

19. A processing device adapted to control a second device, the processing device comprising:
at least one processor; and
at least one memory connected to the at least one processor and storing instructions that, based on being executed by the at least one processor, cause the second device to perform operations comprising:
obtaining information regarding a first resource set related to a first type beam;
obtaining information regarding a second resource set related to a second type beam; and
receiving, from a first device, a control signal for reserving at least one resource within the second resource set based on the first resource set,
wherein the first type beam includes a non-directional beam, and
wherein the second type beam includes a directional beam.

20. A non-transitory computer-readable storage medium storing instructions that, when executed, cause a second device to perform operations comprising:
obtaining information regarding a first resource set related to a first type beam;
obtaining information regarding a second resource set related to a second type beam; and
receiving, from a first device, a control signal for reserving at least one resource within the second resource set based on the first resource set,
wherein the first type beam includes a non-directional beam, and
wherein the second type beam includes a directional beam.
